(19) Europäisches Patentamt
European Patent Office
Office européen des brevets

(11) **EP 4 741 699 A1**

(12) **EUROPEAN PATENT APPLICATION**
published in accordance with Art. 153(4) EPC

(43) Date of publication:
**13.05.2026 Bulletin 2026/20**

(21) Application number: **24836081.0**

(22) Date of filing: **03.07.2024**

(51) International Patent Classification (IPC):
*F16L 59/02* (2006.01)   *H01M 10/651* (2014.01)
*H01M 10/653* (2014.01)   *H01M 10/658* (2014.01)
*H01M 10/6551* (2014.01)   *H01M 10/6555* (2014.01)

(52) Cooperative Patent Classification (CPC):
Y02E 60/10

(86) International application number:
**PCT/JP2024/024117**

(87) International publication number:
**WO 2025/009568 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 03.07.2023  JP 2023109644
25.12.2023  JP 2023218613
25.12.2023  JP 2023218614

(71) Applicant: **DIC Corporation**
**Tokyo 174-8520 (JP)**

(72) Inventors:
• **FUJISAKI Kenichi**
**adachi-gun, Saitama 362-8577 (JP)**
• **TOYOMURA Kyouichi**
**Tokyo 103-8233 (JP)**

(74) Representative: **Schön, Christoph**
**Dr. Schön, Neymeyr & Partner mbB**
**Bavariaring 26**
**80336 München (DE)**

(54) **HEAT ABSORBER AND SECONDARY BATTERY MODULE PROVIDED WITH HEAT ABSORBER**

(57)    An object of the present disclosure is to provide a heat absorber having an excellent heat absorption property, heat insulation property, and pressure resistance and being capable of changing into a heat insulator in a high temperature range, and a secondary battery module including the heat absorber. The present disclosure provides a heat absorber including a bag fillable with a content, and an aqueous solvent and a water-soluble inorganic powder configured to fill the bag as the content, and a secondary battery module including the heat absorber.

[FIG. 1]

EP 4 741 699 A1

**Description**

TECHNICAL FIELD

The present disclosure relates to a heat absorber and a secondary battery module including the heat absorber.

BACKGROUND ART

Secondary batteries capable of controlling a time difference between power storage and demand are used in various applications such as an automobile and a mobile device, and are required for expansion of introduction of renewable energy from the viewpoint of low carbon society construction or energy security, and thus the importance thereof is further increasing at present.

However, in a secondary battery represented by a lithium ion battery, when the temperature of the battery rises due to heat generation during high-speed charging or high-output discharging, there is a risk of breakage of the battery due to thermal runaway. Further, in the future, it is predicted that the heat generation amount further increases as the ultra-high speed charging proceeds, and the development of a temperature rise suppression method for improving the safety of the battery is required. In addition, the secondary battery may experience thermal runaway due to an internal short circuit or the like, and may have problems such as ignition or smoke generation.

Therefore, in order to minimize the damage due to such problems, there is a demand for a technique of suppressing, preventing, or delaying chain explosion by extinguishing the heat of the battery having an abnormally high temperature by heat absorption or by suppressing heat transfer to other battery cells (hereinafter, may be referred to as battery cells or simply cells) by heat absorption and heat insulation.

For example, PTLs 1 and 2 are cited as techniques excellent in heat insulation property and fire spread preventing property. PTL 1 describes a fire spread preventing material for a laminate including a layer A containing sodium silicate having a $SiO_2/Na_2O$ molar ratio of less than 3.1 and a layer B containing precipitated silica. Then, according to PTL 1, since the fire spread preventing material is used in a battery pack including two or more cells, heat transfer between the cells is suppressed in a normal state, and heat spread to adjacent cells is suppressed in an abnormal state.

In addition, PTL 2 describes a partition member including a liquid, a heat insulating material, and an exterior body that accommodates the liquid and the heat insulating material. Further, PTL 2 discloses that by appropriately setting the peel strength of a sealant resin layer of a sheet-shaped member in contact with the heat insulating material and the crystal melting properties of the sealant resin layer, the partition member maintains a cooling function during long-term use and has excellent stability at a release temperature of the cooling liquid inside the sheet-shaped member.

CITATION LIST

PATENT LITERATURE

PTL 1: WO2022/270359
PTL 2: JP2020-161290A

SUMMARY OF INVENTION

TECHNICAL PROBLEM

However, in the technique of PTL 1, since water (for example, water molecules in sodium silicate) contained in the layer A is generated by causing a heat absorption reaction in a temperature range of 100°C to 300°C, the content of water is limited, and a sufficient heat absorption effect cannot be obtained.

In addition, the technique of PTL 2 only lists various porous bodies, fibers, or particles as the heat insulating material, and does not consider at all the point that in a battery having an abnormally high temperature, the partition member itself exhibits a heat insulation effect to suppress the heat transfer to other cells, thereby suppressing, preventing, or delaying the chain explosion. Further, in the case where a separator member such as the partition member in PTL 2 is used in a laminated secondary battery, when the expansion and contraction of the cell itself due to charging and discharging or the rapid expansion of the cell during the thermal runaway occurs, the thickness between the adjacent cells changes, and thus the separator member is required to have mechanical properties such as a predetermined pressure resistance. However, since the mechanical properties such as a pressure resistance are not considered in PTL 2, there is a problem that the heat is easily transferred between the adjacent cells since a distance between the cells is shortened particularly when the cells expand.

Therefore, an object of the present disclosure is to provide a heat absorber having an excellent heat absorption property and being capable of changing into a heat insulator in a high temperature range to have an excellent heat insulation property and pressure resistance, and a secondary battery module including the heat absorber.

SOLUTION TO PROBLEM

The present inventors have found that a heat absorber containing an aqueous solvent and a water-soluble inorganic powder in a bag exhibits an excellent heat absorption property, heat insulation property, and pressure resistance, and can change into a heat insulator in a high temperature range (for example, 150°C or higher), and have completed the present invention as follows.

[1] The present disclosure provides a heat absorber including: a bag fillable with a content; and an aqueous solvent and a water-soluble inorganic powder that dissolves in an amount of 1 g or more in 100 g of water at 20°C, which are configured to fill the bag as the content.

[2] The heat absorber according to [1], in which the water-soluble inorganic powder has a solubility (g) of 5 g/100 g or more in water at 20°C.

[3] The heat absorber according to [1] or [2], in which the content further contains one or two or more selected from the group consisting of an antifreezing agent and an inorganic fiber.

[4] The heat absorber according to any one of [1] to [3], in which the water-soluble inorganic powder is one or two or more selected from a chloride, a sulfate, a carbonate, a nitrate, a phosphate, an acetate, an alkali metal oxide, and an alkaline earth metal oxide.

[5] The heat absorber according to any one of [1] to [4], in which an aqueous solution containing the aqueous solvent and the water-soluble inorganic powder fills the bag as the content, and a content of the water-soluble inorganic powder in the aqueous solution is 5 mass% to 80 mass% with respect to a total amount of the aqueous solution.

[6] The heat absorber according to any one of [1] to [5], in which the content changes into a porous body when the content is heated to 120°C or higher.

[7] The heat absorber according to any one of [1] to [6], in which a rate of change in thickness is 70% or more, which is represented by the following equation (I):

"Rate of change in thickness (%) = (thickness of heat absorber after pressing, at 0.5 MPa for 60 seconds, surface of heat absorber heated under following heating conditions)/(thickness of heat absorber before pressing, at 0.5 MPa for 60 seconds, surface of heat absorber heated under following heating conditions) × 100"                    [Math. 1]

Heating conditions:
"the heat absorber is heated with a heat amount of 50 kW/m$^2$ by radiant heat until a temperature of a surface opposite to the heated surface (back surface) reaches a predetermined temperature, then the heat absorber is allowed to dissipate heat at room temperature, and is naturally cooled until the temperature of the surface of the heat absorber reaches room temperature, and the rate of change in thickness (%) before and after heating is calculated, where the heated surface of the heat absorber is pressed at 0.5 MPa for 60 seconds".

[8] A secondary battery module including: the heat absorber according to any one of [1] to [7].

[9] A secondary battery module including: the heat absorber according to any one of [1] to [7] between battery cells.

ADVANTAGEOUS EFFECTS OF INVENTION

With the heat absorber according to the present disclosure, it is possible to provide a heat absorber having an excellent heat absorption property and being capable of changing into a heat insulator in a high temperature range to have an excellent heat insulation property and pressure resistance.

According to the present disclosure, it is possible to provide a secondary battery module having high safety by including a heat absorber having an excellent heat absorption property and being capable of changing into a heat insulator in a high temperature range to have an excellent heat insulation property and pressure resistance.

BRIEF DESCRIPTION OF DRAWINGS

[FIG. 1] FIG. 1 shows an example of a secondary battery module on which a heat absorber according to the present embodiment can be mounted.

[FIG. 2] FIG. 2 is a perspective view schematically showing an exploded state of the secondary battery module in FIG. 1.

[FIG. 3] FIG. 3 is a graph showing results of a cone calorimeter test (test conditions: radiation intensity: 50 kw/m$^2$, heating time: 20 minutes) on heat absorbers in Examples and sheets in Comparative Examples, in which the vertical axis represents the temperature and the horizontal axis represents the elapsed time.

[FIG. 4] FIG. 4 is a schematic diagram of a cone calorimeter test device used in Examples and Comparative Examples.

[FIG. 5] (a) in FIG. 5 is an image showing that a heat absorber (1) prepared in Example 1 has changed into a porous body. (b) in FIG. 5 is an image showing that a heat absorber (2) prepared in Example 2 has changed into a porous body. In addition, both (a) and (b) in FIG. 5 are images showing a state where an edge portion of the porous body is cut.

DESCRIPTION OF EMBODIMENTS

Hereinafter, an embodiment of the present invention (referred to as "the present embodiment") will be described in detail, but the present disclosure is not limited to the following description, and various modifications can be made within the scope of the gist thereof.

[Heat Absorber]

A heat absorber according to the present disclosure includes: a bag fillable with a content; and an aqueous solvent and a water-soluble inorganic powder that dissolves in an amount of 1 g or more in 100 g of water at 20°C, which are configured to fill the bag as the content.

Accordingly, the heat absorption property, the heat insulation property, and the pressure resistance are excellent, and the heat absorber can change into a heat insulator in a high temperature range.

The heat can be absorbed by the evaporation latent heat of the aqueous solvent or by the water-soluble inorganic powder in the bag. Therefore, the evaporation latent heat of water having a heat absorption amount larger than that of a general hydrate can be used. In addition, since the heat is absorbed as sensible heat of the aqueous solvent, the temperature can be stabilized even at room temperature. On the other hand, when exposed to high temperature heat due to combustion or the like, the aqueous solvent evaporates, but the presence of the water-soluble inorganic powder exhibits a heat insulation and fire prevention effect. More specifically, it mainly functions as a heat absorber in a relatively low temperature zone (for example, around room temperature to 100°C). On the other hand, in a temperature zone from the critical temperature (for example, 150°C) to higher than the thermal runaway temperature (for example, around 1,000°C), the water-soluble inorganic powder in the heat absorber changes into a porous body, and thus can also act as a heat insulator. As a result, when the heat absorber according to the present embodiment is disposed between a plurality of battery cells of a battery laminate (battery module) in which the battery cells are laminated, the thermal influence on the adjacent cells can be blocked or suppressed.

In addition, since the heat absorber according to the present disclosure has the fluidity of the content in a relatively low temperature zone, the heat absorber easily follows and adheres to the cell, and can exhibit the cushioning property of absorbing a stress even when the cell expands and contracts due to the heat. On the other hand, in a temperature zone higher than the thermal runaway temperature, the water-soluble inorganic powder in the heat absorber is sintered and deformed into a hard plate-shaped porous body, so that the pressure resistance strength can be increased. Accordingly, since a distance between the cells can be kept constant, it is possible to control the thermal conductivity while maintaining an effective heat insulation property, and to effectively suppress chain explosion between the cells.

The aqueous solvent in the heat absorber according to the present disclosure may be contained in the content according to the present embodiment as a hydrogel composed of a hydrogel body and the aqueous solvent, as necessary.

When the hydrogel body is contained as the content, the cushioning property and the impact resistance can be imparted to the heat absorber.

Note that, since the heat absorber according to the present disclosure exhibits not only the heat absorption effect but also effects such as the heat insulation property, the heat absorber can be strictly referred to as a member capable of absorbing and insulating heat from the outside, that is, a heat control member that controls the heat from the outside.

The content in the heat absorber according to the present embodiment may further contain one or two or more selected from the group consisting of an inorganic fiber, an antifreezing agent, and an additive.

When an inorganic fiber is further contained as the content, the cushioning property and the pressure resistance can be further imparted to the heat absorber, or the inorganic fiber acts as a foam nucleating agent, and the water-soluble inorganic powder is easily formed into a foam (= porous body). In addition, since the inorganic fiber contained as the content retains water, the shape of the heat absorber is likely to be formed into a desired shape. Then, when the aqueous solvent volatilizes, a void portion is generated in the inorganic fiber, and a composite containing the inorganic fiber and the water-soluble inorganic powder is likely to be formed into a porous body, and thus, by changing from the heat absorber into the heat insulator, both the effects of heat absorption and heat insulation can be further exhibited in the entire thickness of the heat absorber.

In addition, when an antifreezing agent is further contained as the content, freezing below the freezing point can be suppressed. In addition, by using the solidification heat of the aqueous solvent, it is possible to suppress a decrease in temperature of the battery in a cold environment. In the case of water, the solidification heat is generated at about 0°C, but by using an antifreezing agent at this time, the temperature at which the solidification heat is generated can be lowered, and the decrease in temperature of the battery can be suppressed at a lower temperature.

<Properties of Heat Absorber>

The heat absorption starting temperature of the heat absorber according to the present embodiment is preferably 400°C or lower, more preferably 160°C or lower, still more preferably 120°C or lower, even more preferably 110°C or lower, and even still more preferably 100°C or lower.

The range of the heat absorption starting temperature of the heat absorber according to the present embodiment is preferably 35°C or higher and 400°C or lower, more preferably 37°C or higher and 160°C or lower, and still more preferably 40°C or higher and 110°C or lower.

The upper limit value and the lower limit value of the heat absorption starting temperature of the heat absorber can be appropriately changed in combination.

The heat absorption starting temperature (°C) in the present description is defined, in a DSC measurement curve which is a measurement result of a differential scanning calorimeter (DSC), as a temperature at an intersection between a straight line obtained by extending a base line on the low temperature side to the high temperature side and a tangent drawn at a point where the gradient is the maximum on a low temperature side of the curve of a heat absorption peak due to evaporation. However, when a plurality of heat absorption peaks are observed, an intersection between a straight line obtained by extending the base line on the low temperature side to the high temperature side and a tangent drawn at a point where the gradient is the maximum on the low temperature side of the curve of each of the plurality of heat absorption peaks is calculated for each of the plurality of heat absorption peaks, and the lowest temperature among the temperatures at the plurality of intersections is set as the heat absorption starting temperature.

The heat absorption peak temperature of the heat absorber according to the present embodiment is preferably in the range of at least 80°C to 400°C, and more preferably in the range of 90°C to 160°C.

The heat absorption peak temperature in the present description refers to a temperature (°C) at the maximum value of the heat absorption peak due to evaporation in a DSC measurement curve which is a measurement result of a differential scanning calorimeter (DSC). Note that, when a plurality of heat absorption peaks are observed, at least one of the plurality of heat absorption peaks may be present in the range of 80°C to 160°C.

The heat absorption amount of the heat absorber according to the present embodiment is not particularly limited, and is preferably in the range of 100 J/g or more and 3,000 J/g or less, more preferably 200 J/g or more and 2,500 J/g or less, still more preferably 300 J/g or more and 2,000 J/g or less, and even more preferably 500 J/g or more and 1,500 J/g or less at the heat absorption peak temperature (in the range of 80°C to 160°C). The preferred range of the heat absorption amount can be determined by appropriately changing the upper limit and the lower limit in combination.

Note that, the heat absorption starting temperature, the heat absorption peak temperature, and the heat absorption amount of the heat absorber according to the present embodiment are values obtained by the method in Examples to be described later using a differential scanning calorimeter (DSC).

<Preferred Shape of Heat Absorber>

The shape or the size of the heat absorber according to the present embodiment is not particularly limited, and may be, for example, a substantially spherical shape, a substantially flat plate shape, or an irregular shape, and is appropriately selected according to applications. For example, a substantially flat plate-shaped heat absorber is preferred since it is easily installed between adjacent battery cells.

The average thickness when the heat absorber according to the present embodiment has a substantially flat plate shape is not particularly limited, and may be, for example, in the range of 100 $\mu$m to 50,000 $\mu$m. The average thickness is preferably 100 $\mu$m or more, more preferably 200 $\mu$m or more and 20,000 $\mu$m or less, still more preferably 500 $\mu$m or more and 10,000 $\mu$m or less, and particularly preferably 1,000 $\mu$m or more and 8,000 $\mu$m or less. The preferred range of the average thickness can be determined by appropriately changing the upper limit and the lower limit in combination.

Hereinafter, essential components such as the bag, the water-soluble inorganic powder that dissolves in an amount of 1 g or more in 100 g of water at 20°C, and the aqueous solvent, and optional components such as an inorganic fiber, an antifreezing agent, and an additive that are blended as necessary, which are components of the heat absorber according to the present embodiment, will be described.

(Bag)

The bag according to the present embodiment is not particularly limited as long as it can be filled with a content such as an aqueous solvent and a water-soluble inorganic powder that dissolves in an amount of 1 g or more in 100 g of water at 20°C. The bag is preferably, for example, a three-sided bag having an opening on an upper end side and a body portion closed at a lower end, and having a structure in which heat sealing is performed to close the opening after all the contents such as the aqueous solvent and the water-soluble inorganic powder are accommodated.

Since the three-sided bag has a structure in which three sides including a lower end portion and side surface portions of two sheets are bonded to each other and sealed after being filled with the contents from the opening, the three-sided bag has excellent sealing capability and has a substantially flat plate shape, and thus is easily inserted between battery cells.

The bag according to the present embodiment is preferably formed of a sheet. In addition, as a preferred embodiment of the bag according to the present embodiment, a heat sealing region is formed by, in a state where two films having a desired size and shape (for example, a rectangular shape or a (substantially) circular shape) are laminated, thermocompression bonding predetermined heat sealing regions (for example, edge portions of the films) to form an opening according to the purpose of use or the like. Accordingly, it is possible to prepare a three-sided bag in which an internal space region fillable with the content is formed, the opening is formed such that the internal space region is filled with the content through the opening, and the heat sealing regions of the two sheets are bonded to each other. Then, the bag is filled with the contents, and then the openings are pressure-bonded to each other and heat-sealed, whereby the contents can be sealed.

Note that, in the present description, "sealing" refers to a state where the inside and the outside of the bag are substantially blocked.

The sheet used in the bag according to the present embodiment is not particularly limited as long as it exhibits the water shielding property, and examples thereof include a known resin film, a resin film having a metal layer, and a film having a metal layer.

The average thickness of the sheet used in the bag according to the present embodiment is not particularly limited, and is, for example, preferably 30 $\mu$ m to 200 $\mu$ m, and more preferably 60 $\mu$ m to 150 $\mu$ m.

Examples of the material for the resin film include one or two or more resins of a polyester resin, a nylon resin, a polycarbonate resin, a polypropylene resin, a polyethylene resin, a cyclic polyolefin resin, a polystyrene resin, a fluororesin, and an elastomer. These plastics can be used for the bag as a film, a sheet, a tube, or the like.

In addition, as the resin film having a metal layer, a metal such as aluminum or a metal oxide such as silica or alumina may be laminated as a metal foil, a vapor-deposited film, or the like on the resin film. By using the resin film having a metal layer, the water vapor permeability of the resin film can be reduced. In addition, the water vapor permeability of the sheet can be adjusted by selecting the material, the thickness, the combination, and the like. In addition, examples of the lamination method include dry lamination, extrusion lamination, thermal lamination, co-extrusion, multilayer blow molding, multilayer injection molding, and coating. Note that, examples of a preferred form of the resin film having a metal layer include an aluminum laminate film (a film in which an aluminum foil (including a vapor-deposited aluminum layer) and a thermoplastic resin film (for example, a polyethylene film, a PP film, or a PET film) laminated on at least one surface of the aluminum foil are integrated).

In the present embodiment, an adhesive layer may be formed in the heat sealing region and the closed opening for the purpose of sealing. As the adhesive layer, for example, a laminate adhesive such as a polyester-based adhesive, a polyether-based adhesive, or a polyurethane-based adhesive can be suitably used. Further, the properties of the adhesive are not particularly limited, and for example, any of a solvent type, a solvent-free type, and an aqueous type can be used.

For example, in the present invention, a bag-shaped body in which a laminate film is formed into a bag shape is preferred, a film in which a metal foil and a resin film are laminated is preferred as the laminate film, and examples thereof include a three-layer laminated film composed of an outer layer resin film/metal foil/inner resin film. Specifically, a bag obtained by sealing a resin-based film having an aluminum-deposited vapor-deposited layer on the outer side via a polyurethane-based laminate adhesive layer, a bag obtained by sealing a three-layer laminate film having a nylon film on the outer side, an aluminum foil at the center, and an adhesive layer made of a modified polypropylene or the like on the inner side via a polyurethane-based laminate adhesive layer, or a bag obtained by sealing a laminate film having a PET layer, an aluminum layer, and a polyethylene layer via a polyurethane-based laminate adhesive layer can be suitably used. Examples thereof include gas barrier aluminum bag AB series (manufactured by MITSUBISHI GAS CHEMICAL COMPANY, INC.) and LAMIZIP AL type (manufactured by SEISANNIPPONSHA LTD.).

The higher the melting temperature (for example, 120°C to 140°C) of the adhesive provided in the heat sealing region or used to close the opening of the bag according to the present embodiment, the higher the strength and the higher the tendency to withstand the internal pressure.

The water vapor permeability ([g/(m²·24 h)]) of the sheet constituting the bag according to the present embodiment is preferably 50 g/(m²·24 h) or less, more preferably 10 g/(m²·24 h) or less, and still more preferably 5

g/(m$^2$·24 h) or less.

When the water vapor permeability of the sheet constituting the bag is in the range of 50 g/(m$^2$·24 h) or less, it is possible to prevent the moisture inside the bag from leaking to the outside, and it is preferred from the viewpoint of preventing a decrease in heat absorption performance due to aging.

The water vapor permeability ([g/(m$^2$·24 h)]) in the present description is measured under an environment of a temperature of 40°C and a relative humidity of 90% in accordance with the standard in JIS K7129.

(Water-soluble Inorganic Powder That Dissolves in Amount of 1 g or More in 100 g of Water at 20°C (hereinafter, also referred to as water-soluble inorganic powder))

The content in the heat absorber according to the present embodiment contains a water-soluble inorganic powder. In addition, the water-soluble inorganic powder dissolves in an amount of 1 g or more in 100 g of water at 20°C. In addition, since the water-soluble inorganic powder exhibits hydrophilicity, the water-soluble inorganic powder is likely to be dissolved in the aqueous solvent, and the water-soluble inorganic powder is likely to be uniformly present in the content. As a result, in a temperature zone higher than the thermal runaway temperature (for example, around 1,000°C), the entire water-soluble inorganic powder is likely to form a homogeneous porous body, and can also effectively act as a heat insulator.

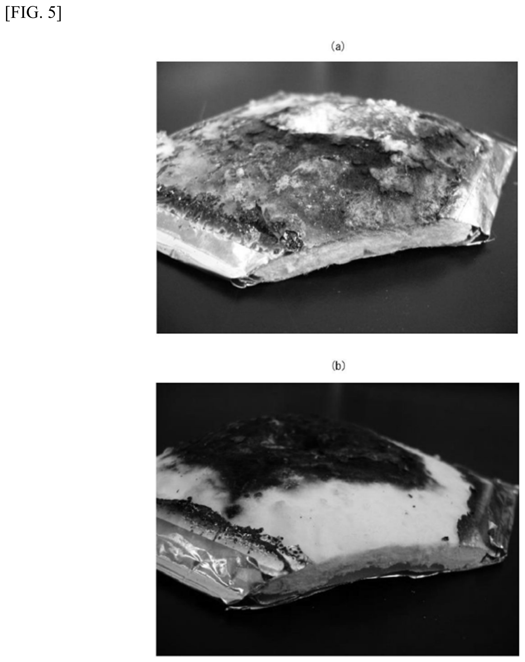

In addition, when the water-soluble inorganic powder and the aqueous solvent are present in the content in the heat absorber, a synergistic effect with the heat absorption of the aqueous solvent is exhibited, and the heat can be continuously absorbed at a heat absorption temperature different from that of the aqueous solvent. In addition, even when the heat absorber is exposed to high temperature heat, the water-soluble inorganic powder can be formed into a porous body (for example, see photographs in FIGS. 5 and 6 to be described later). As a result, an excellent heat insulation and fire prevention effect is exhibited. Therefore, the heat absorber containing the water-soluble inorganic powder mainly functions as a heat absorber in a relatively low temperature zone (for example, around room temperature to 100°C). On the other hand, in a temperature zone from the critical temperature (for example, 150°C) to higher than the thermal runaway temperature (for example, around 1,000°C), the entire water-soluble inorganic powder changes into a porous body, and thus can also act as a heat insulator. As a result, when the heat absorber according to the present embodiment is disposed between a plurality of cells of a battery laminate in which the cells are laminated, the thermal influence on the adjacent cells can be blocked or suppressed.

For example, when thermal runaway occurs, the heat absorber between the cells is compressed due to the expansion of the cells, and the distance between the cells becomes extremely small, which makes it difficult to exhibit effective heat insulation performance. However, when the water-soluble inorganic powder is contained as the content in the heat absorber according to the present embodiment, in the case where the heat absorber is heated at a high temperature due to the thermal runaway or the like, the water-soluble inorganic powder itself is sintered to form a porous body having certain strength, and thus the pressure resistance strength can be increased. Accordingly, since the distance between the cells can be kept constant, it is possible to maintain an effective heat insulation property, and to effectively suppress the chain explosion between the cells.

The water-soluble inorganic powder according to the present embodiment dissolves in an aqueous solvent. Accordingly, the water-soluble inorganic powder is likely to dissolve in the aqueous solvent, and thus the water-soluble inorganic powder is likely to be uniformly present in the content. Note that, the "water-soluble" in the present description means that the water-soluble inorganic powder dissolves in an amount of 1 g or more in 100 g of water at 20°C. Therefore, the water-soluble inorganic powder according to the present embodiment can be an inorganic powder that dissolves in an amount of 1 g or more in 100 g of water at 20°C.

The solubility of the water-soluble inorganic powder according to the present embodiment is 1 g or more in 100 g of water at 20°C. The solubility of the water-soluble inorganic powder (in 100 g of water at 20°C) is preferably 1 g or more and 100 g or less, more preferably 2 g or more and 90 g or less, still more preferably 3 g or more and 80 g or less, even more preferably 5 g or more and 70 g or less, even still more preferably 15 g or more and 60 g or less, and particularly preferably 25 g or more and 50 g or less, from the viewpoint of the stability and the dispersibility of the water-soluble inorganic powder in the heat absorber and the sinterability of the water-soluble inorganic powder by high temperature heating.

Regarding the solubility of the water-soluble inorganic powder in 100 g of water at 20°C, the upper limit values and the lower limit values can be appropriately changed in combination.

When the solubility of the water-soluble inorganic powder at 20°C is within the above range, the dissolubility is ensured, and thus the water-soluble inorganic powder is uniformly dissolved or dispersed in the aqueous solvent, so that a homogeneous porous body is likely to be formed during sintering.

The solubility of the water-soluble inorganic powder according to the present embodiment is preferably 10 g or more in 100 g of water at 60°C. The solubility of the water-soluble inorganic powder (in 100 g of water at 60°C) is preferably 10 g or more and 150 g or less, more preferably 15 g or more and 120 g or less, still more preferably 20 g or more and 100 g or less, even more preferably 25 g or more and 80 g or less, even still more preferably 30 g or more and 60 g or less, and particularly preferably 35 g or more.

Regarding the solubility of the water-soluble inorganic powder in 100 g of water at 60°C, the upper limit values and the lower limit values can be appropriately changed in combination.

The solubility of the water-soluble inorganic powder according to the present embodiment is preferably 15 g or more in 100 g of water at 80°C. The solubility of the water-soluble inorganic powder (in 100 g of water at 80°C) is preferably 15 g or more and 160 g or less, more preferably 20 g or more and 120 g or less, still more preferably 25 g or more and 100 g or less, even still more preferably 30 g or more and 80 g or less, and particularly preferably 35 g or more and 60 g or less.

Regarding the solubility of the water-soluble inorganic powder in 100 g of water at 80°C, the upper limit values and the lower limit values can be appropriately changed in combination.

The solubility of the water-soluble inorganic powder according to the present embodiment is preferably 15 g or more in 100 g of water at 100°C. The solubility of the water-soluble inorganic powder (in 100 g of water at 100°C) can be, for example, 15 g or more and 170 g or less, is preferably 20 g or more and 130 g or less, more preferably 25 g or more and 100 g or less, still more preferably 30 g or more and 80 g or less, and particularly preferably 35 g or more and 60 g or less.

Regarding the solubility of the water-soluble inorganic powder in 100 g of water at 100°C, the upper limit values and the lower limit values can be appropriately changed in combination.

The solubility of the water-soluble inorganic powder according to the present embodiment is preferably 1 g or more and 90 g or less, and more preferably 5 g or more and 90 g or less in 100 g of water at 20°C, 5 g or more and 100 g or less in 100 g of water at 40°C, 10 g or more and 150 g or less in 100 g of water at 60°C, 15 g or more and 160 g or less in 100 g of water at 80°C, and 15 g or more and 170 g or less in 100 g of water at 100°C.

The solubility of the water-soluble inorganic powder at each temperature is preferably within the above range from the viewpoint of exhibiting a suitable heat absorption action and pressure resistance.

Regarding the solubility of the water-soluble inorganic powder in 100 g of water at 20°C, the upper limit values and the lower limit values can be appropriately changed in combination.

A method for measuring the solubility in the present description is as follows.

A predetermined amount of a water-soluble inorganic powder as a measurement target is weighed in a glass bottle, then 100 g of pure water (pH = 7) is added to the glass bottle, and the mixture is stirred on a mix rotor at a rotation speed of 80 rpm for 24 hours at temperatures of 20°C, 40°C, 60°C, 80°C, and 100°C at 1 atm to prepare a mixed solution. Then, the transmittance of the mixed solution after stirring for 24 hours is measured under the following conditions. At this time, the measurement of the transmittance is performed by changing the dissolution amount of the water-soluble inorganic powder, and the upper limit amount (g) at which the transmittance is 99% is defined as the solubility of the water-soluble inorganic powder in water.

<Transmittance Measurement Conditions>

Dynamic light scattering (DLS) measurement
Apparatus: DLS measurement apparatus DLS-8000 manufactured by OTSUKA ELECTRONICS CO., LTD
Laser wavelength, output: 488 nm/100 mW
Sample cell: NMR tube

The water-soluble inorganic powder according to the present embodiment is preferably a solid at room temperature. In addition, in the heat absorber according to the present embodiment, the bag is preferably filled with an aqueous solution containing an aqueous solvent and a water-soluble inorganic powder as the content in the heat absorber.

When the aqueous solution containing the aqueous solvent and the water-soluble inorganic powder fills the bag as the content in the heat absorber, the water-soluble inorganic powder is completely dissolved in the aqueous solvent, so that the water-soluble inorganic powder is uniformly present in the content, and as a result, a homogeneous porous body can be formed.

The transmittance of the aqueous solution is preferably 99% or more, and more preferably 99.5% or more.

The heat absorption amount of the water-soluble inorganic powder (= heat absorption amount (J/g) when heated from room temperature (23°C) to 1,000°C) is preferably 100 J/g or more, more preferably 500 J/g or more, and still more preferably 700 J/g or more. On the other hand, the upper limit of the heat absorption amount of the water-soluble inorganic powder is not particularly limited, and is preferably 4,000 J/g or less.

The heat absorption amount of the water-soluble inorganic powder may be preferably 100 J/g or more and 4,000 J/g or less, and more preferably 500 J/g or more and 4,000 J/g or less. The upper limits and the lower limits of the heat absorption amount of the water-soluble inorganic powder can be appropriately changed in combination.

When the heat absorption amount of the water-soluble inorganic powder is within the above range, the heat absorption property effect is improved, so that a synergistic effect with the heat absorption of the aqueous solvent is exhibited, and the ignition is likely to be suppressed. The upper limits and the lower limits of the content can be appropriately combined.

Note that, the heat absorption amount of the water-soluble inorganic powder can be measured by a differential scanning calorimeter (DSC) as to be described in the section of Examples.

The thermal decomposition starting temperature of the water-soluble inorganic powder according to the present embodiment is preferably 80°C or higher and 800°C or lower, more preferably 90°C or higher and 500°C or lower, still more preferably 100°C or higher and 350°C or lower, and even more preferably 110°C or higher and 150°C or lower. When the thermal decomposition starting temperature of the water-soluble inorganic powder is within the above range, the water-soluble inorganic powder itself is rapidly decomposed, and the ignition is likely to be suppressed. The upper limits and the lower limits of the thermal decomposition starting temperature can be appropriately changed in combination.

Note that, the thermal decomposition starting temperature can be measured by a differential scanning calorimeter (DSC).

The shape of the water-soluble inorganic powder according to the present embodiment is not particularly limited, and examples thereof include a powder shape, a particle shape, a crystalline shape, and a plate shape. In addition, as the water-soluble inorganic powder according to the present embodiment, a water-soluble inorganic powder having the heat absorption effect is preferred, and a preferred embodiment of the water-soluble inorganic powder includes a porous powder, solid particles, or hollow particles.

The water-soluble inorganic powder may have any shape and form as long as it dissolves in an aqueous solvent, and when the water-soluble inorganic powder is in the form of powder or particles, the average particle diameter of the water-soluble inorganic powder is, for example, preferably 0.01 $\mu$m to 200 $\mu$m, more preferably 0.1 $\mu$m to 140 $\mu$m, and still more preferably 10 $\mu$m to 100 $\mu$m. When the average particle diameter is within the above range, the water-soluble inorganic powder is likely to be dispersed in the system.

Note that, the average particle diameter can be a value of a median diameter (D50) measured by using a laser diffraction/scattering particle size distribution analyzer.

The material for the water-soluble inorganic powder according to the present embodiment is preferably a water-soluble inorganic salt. In addition, the water-soluble inorganic salt is preferably one or more compounds composed of a combination of an inorganic cation and an organic/inorganic anion.

Examples of the inorganic cation include an alkali metal ion, an alkaline earth metal ion, an aluminum ion, a zinc ion, a silver ion, a copper (I) ion, and a copper (II) ion, and the inorganic cation is preferably one or two or more selected from the group consisting of a potassium ion, a calcium ion, a magnesium ion, and an aluminum ion.

The organic/inorganic anion is preferably one or two or more selected from an oxygen ion, a sulfate ion, a halogen ion (chlorine ion, fluorine ion, bromine ion, or the like), a nitrate ion, a carbonate ion, an acetate ion, and a phosphate ion.

The water-soluble inorganic powder according to the present embodiment is preferably composed of one or two or more compounds selected from the group consisting of a chloride, a sulfate, a carbonate, a nitrate, a phosphate, an acetate, an alkali metal oxide, and an alkaline earth metal oxide. Accordingly, it is possible to exhibit an excellent dissolubility in an aqueous solvent.

Note that, the water-soluble inorganic powder before being mixed with the aqueous solvent may be an anhydride or a hydrate as long as it has the desired solubility described above. Note that, in the bag, the hydrate of the water-soluble inorganic powder is usually present as an anhydride.

Specifically, the water-soluble inorganic powder or the water-soluble inorganic salt according to the present embodiment is preferably: a chloride such as sodium chloride, potassium chloride, and ammonium chloride; a sulfate such as sodium sulfate, potassium sulfate, magnesium sulfate, aluminum sulfate, and alum; a carbonate such as sodium bicarbonate, sodium sesquicarbonate, sodium carbonate, potassium carbonate, potassium sesquicarbonate, and ammonium carbonate; a nitrate such as sodium nitrate, potassium nitrate, and calcium nitrate; a phosphate such as sodium phosphate, sodium dihydrogen phosphate, dipotassium hydrogen phosphate, and sodium polyphosphate; an acetate such as zinc acetate, sodium acetate, potassium acetate, copper (I) acetate, and copper (II) acetate; an oxide such as chromium oxide, barium oxide, and boric acid oxide; or a hydrate thereof. Among the above, magnesium sulfate or magnesium sulfate heptahydrate is particularly preferred.

As the water-soluble inorganic powder according to the present embodiment, the above-described examples may be used alone or in combination in plural kinds thereof.

The content of the water-soluble inorganic powder according to the present embodiment can be 1 mass% to 90 mass%, may be 3 mass% to 80 mass%, is preferably 5 mass% to 60 mass%, and among them, is preferably 10 mass% to 50 mass%, more preferably 10 mass% to 35 mass%, and still more preferably 15 mass% to 30 mass% with respect to the total amount (100 mass%) of the content in the heat absorber.

When the content of the water-soluble inorganic powder is within the above range, in the case where the heat absorber is exposed to high heat, the sintering is easily performed, and a homogeneous porous body is likely to be formed. In addition, when the water-soluble inorganic powder is a hydrate, the content of the water-soluble inorganic powder does not include the content of water contained in the hydrate which is the water-soluble inorganic powder.

The upper limits and the lower limits of the content of the water-soluble inorganic powder can be appropriately changed in combination.

In the present embodiment, it is preferable that when the content in the heat absorber is heated to 120°C or higher, the content is changed into a porous body. The temperature at which the heat absorber is changed into a porous body is preferably 150°C or higher, preferably 180°C or higher, preferably 200°C or higher, preferably 210°C or higher, preferably 240°C or higher, and preferably 250°C or higher.

When the heat absorber is exposed to high temperature heat due to combustion or the like, the aqueous solvent evaporates, but since the water-soluble inorganic powder can form a sintered porous body, a member (for example, a battery cell) adjacent to the heat absorber can exhibit the heat insulation and fire prevention effect.

In particular, when a member (for example, a battery cell) is sandwiched or the periphery of the member is surrounded by two or more heat absorbers according to the present embodiment, it is considered that heat of the member is less likely to leak to the outside. For example, when the member is exposed to high heat, the water-soluble inorganic powder in the heat absorber forms a porous body by being sintered, and the porous body serves as a fire wall, so that it is considered that an excellent heat insulation and fire prevention effect is exhibited. Therefore, when the heat absorber according to the present embodiment is disposed in, for example, a secondary battery module such as a laminated battery to be described later, it is possible to suppress, prevent, or delay the chain explosion by suppressing the heat transfer to other cells.

(Aqueous Solvent)

The heat absorber according to the present embodiment contains an aqueous solvent as the content. Accordingly, the heat can be absorbed by the evaporation latent heat of the aqueous solvent, in particular, water in the bag, so that the evaporation latent heat of water having a larger heat absorption amount than that of a general hydrate can be used. In addition, since the heat is absorbed as sensible heat of the aqueous solvent, the temperature can be stabilized even at room temperature. On the other hand, when the heat absorber is exposed to high temperature heat due to combustion or the like, the aqueous solvent evaporates, but since the water-soluble inorganic powder can form a sintered porous body, a member adjacent to the heat absorber can exhibit the heat insulation and fire prevention effect.

The aqueous solvent according to the present embodiment may contain water as a main component, which means water or a solvent containing water as a main component. Therefore, the aqueous solvent includes a mixed solvent with a solvent other than water and an aqueous solution containing a salt (for example, a buffer solution or an electrolyte solution). Note that, in the present description, "containing water as a main component" means that water is contained in an amount of 45 mass% or more with respect to the entire aqueous solvent. In addition, as the water, purified water, pure water, ultrapure water, distilled water, or the like can be used without particular limitation.

Examples of the salt include: alkali metal halides such as sodium chloride or potassium chloride; alkaline earth metal halides such as magnesium chloride or calcium chloride; and salts having buffering ability such as tris-hydrochloric acid, glycine hydrochloride, citric acid-sodium citrate, acetic acid-sodium acetate, citric acid-disodium hydrogen phosphate, sodium dihydrogen phosphate-disodium hydrogen phosphate, glycine-sodium hydroxide, and sodium carbonate-sodium bicarbonate. In addition, as the aqueous solvent, a good buffer such as HEPES or MOPS may be used.

Examples of the solvent other than water constituting the mixed solvent include an organic solvent that can be uniformly mixed with water (for example, a lower alcohol, a lower ketone, or the like), or a low volatile solvent used as an antifreezing agent.

The content of water in the aqueous solvent according to the present embodiment is preferably 50 mass% to 100 mass%, more preferably 80 mass% to 100 mass%, still more preferably 90 mass% to 100 mass%, and particularly preferably 95 mass% to 100 mass% with respect to the entire aqueous solvent.

The preferred range of the content of water in the aqueous solvent can be determined by appropriately combining the upper limit and the lower limit.

The content of the aqueous solvent according to the present embodiment is preferably 10 mass% or more and 95 mass% or less, more preferably 20 mass% or more and 90 mass% or less, still more preferably 30 mass% or more and 80 mass% or less, and particularly preferably 50 mass% or more and 70 mass% or less with respect to the total amount (100 mass%) of the content in the heat absorber.

The preferred range of the content of the aqueous solvent can be determined by appropriately changing the upper limit and the lower limit in combination.

When the content of the aqueous solvent is within the above range, the heat absorption property, the heat insulation property, and the pressure resistance are more excellent, and the heat absorber can be changed into a heat insulator in a high temperature range.

The bag, the water-soluble inorganic powder, and the aqueous solvent, which are essential components in the present disclosure, have been described above. Hereinafter, the inorganic fiber, the antifreezing agent, and the additives as optional components in the present disclosure will be described.

The content in the heat absorber according to the present embodiment may contain one or two or more selected from the group consisting of an inorganic fiber and an antifreezing agent.

(Inorganic Fiber)

The inorganic fiber according to the present embodiment is a fiber aggregate in which fibers composed of an inorganic material are entangled with each other or a porous body composed of an inorganic material, and has an effect that the water-soluble inorganic powder as a foam nucleating agent is likely to form a porous body. In addition, when the water-soluble water-soluble inorganic powder changes into a porous body, a porous composite containing the inorganic fiber and the water-soluble inorganic powder can be formed. Accordingly, for example, when the temperature is equal to or higher than the thermal runaway temperature, a heat insulation wall having desired mechanical strength is likely to be formed.

Specific examples of the inorganic fiber include woven and knitted fabrics (glass cloth or silica cloth), nonwoven fabrics (a glass fiber or a ceramic fiber), and cotton-like materials (including not only glass wool, rock wool, and ceramic wool but also spongy materials (a sponge body)).

The heat resistance of the inorganic fiber according to the present embodiment is preferably 300°C or higher, more preferably 700°C or higher, and still more preferably 1200°C or higher.

The heat resistance refers to a temperature at which a rate of change (in the thickness direction) of a volume change is -20% when the temperature of a specimen is changed to 200°C to 700°C in units of 100°C and held at each temperature for 30 minutes.

When the inorganic fiber according to the present embodiment is a porous body having at least one of a specific ventilation resistance, a specific porosity, and a specific tortuosity, the entire heat absorber is likely to form a relatively stable porous body even in a high temperature range (a temperature zone from the critical temperature (for example, 150°C) to higher than the thermal runaway temperature (for example, around 1,000°C)), and is thus likely to act as a heat insulator. In particular, when the inorganic fiber has a specific porosity, a more excellent heat insulator can be obtained by the combination with the water-soluble inorganic powder.

<Porosity>

The average porosity of the inorganic fiber according to the present embodiment is preferably 30% or more and 99.7% or less, more preferably 50% or more and 99.5% or less, still more preferably 70% or more and 99.3% or less, and particularly preferably 90% or more and 99% or less.

In the present description, the average porosity of the inorganic fiber is a value obtained based on the bulk density to be described later and the true density to be described later, and is a density based on the volume occupied by the inorganic fiber. In addition, the bulk density is a density based on the volume including voids contained in the inorganic fiber. In contrast, the true density is a density based on the volume occupied by the material for the inorganic fiber.

The average porosity (%) can be determined based on the following bulk density $\rho$ f and true density $\rho$ r using the following equation (1).

$$\text{Average porosity } (\%) = ((1/\rho \text{ f})\text{-}(1/\rho \text{ r}))/(1/\rho \text{ f}) \times 100 \qquad \text{Equation (1)}$$

<Bulk Density>

The bulk density $\rho$ f of the inorganic fiber according to the present embodiment is preferably 0.020 g/cm$^3$ or more and 1 g/cm$^3$ or less, more preferably 0.022 g/cm$^3$ or more and 0.5 g/cm$^3$ or less, still more preferably 0.024 g/cm$^3$ or more and 0.1 g/cm$^3$ or less, and particularly preferably 0.026 g/cm$^3$ or more and 0.07 g/cm$^3$ or less.

The dimensions of the inorganic fiber are measured to calculate a bulk volume V of the inorganic fiber, and then a mass M of the inorganic fiber is measured using a precision balance. Based on the obtained mass M and bulk volume V, the bulk density of the inorganic fiber can be determined using the following equation (2).

$$\text{Bulk density } \rho \text{ f (g/cm}^3\text{)} = \text{M/V} \qquad \text{Equation (2)}$$

<True Density>

The true density $\rho$ r of the inorganic fiber according to the present embodiment is preferably 0.5 g/cm$^3$ or more and 10 g/cm$^3$ or less, more preferably 1 g/cm$^3$ or more and 7 g/cm$^3$ or less, still more preferably 1.5 g/cm$^3$ or more and 5 g/cm$^3$ or less, and particularly preferably 2 g/cm$^3$ or more and 3 g/cm$^3$ or less.

The method for measuring the true density $\rho$ r of the inorganic fiber is not particularly limited, and the true density $\rho$ r can be calculated by a float-sink method using a mixed solution of n-heptane, carbon tetrachloride, and ethylene dibromide. Specifically, first, a sample piece of the inorganic fiber having an appropriate size is charged into a stoppered test tube. Next, a mixed solvent obtained by appropriately mixing the three kinds of solvents is added to the test tube, which is immersed in a constant temperature bath at 30°C. When the sample piece floats, low-density n-heptane is added. On the other hand, when the test piece sinks, high-density ethylene dibromide is added. This operation is repeated such that the test piece floats in the mixed solvent. Finally, the density of the mixed solvent is measured using a Gay-Lussac pycnometer.

<Composition of Inorganic Fiber>

Examples of the material constituting the inorganic fiber according to the present embodiment or the inorganic material contained in the inorganic fiber include an element selected from the group consisting of silicon, titanium, barium, zirconium, zinc, calcium, magnesium, cerium, aluminum, indium, tin, and lanthanum, a single oxide of the above element or a composite oxide of the above element, a single sulfide of the above element or a composite sulfide of the above element, and a single phosphate compound of the above element or a composite phosphate compound of the above element, and silicon, titanium, zirconium, magnesium, aluminum, indium, tin, and a single or composite oxide thereof are preferred.

Specific examples of the inorganic material constituting the inorganic fiber include a glass, shirasu, silica, silica gel, alumina, clay, ceramics, vermiculite, bentonite, perovskite compounds (strontium titanate), talc, mica, wollastonite, potassium titanate, calcium oxide, basic magnesium sulfate, sepiolite, xonotlite, pearlite, zeolite, apatite, hydroxyapatite, kaolinite, montmorillonite, acid clay, diatomaceous earth, basalt, wet silica, dry silica, aerogel, mica, and vermiculite.

<Shape of Inorganic Material Fiber>

The shape of the inorganic fiber according to the present embodiment is selected from a yarn shape, a fiber shape, a fiber bundle shape, a fiber aggregate shape, a cotton shape, a woven and knitted fabric shape, a nonwoven fabric shape, and the like. Note that, the "woven and knitted fabric" as in the present description refers to a woven fabric or a knitted fabric.

When the inorganic fiber according to the present embodiment is a woven fabric, a known weaving method such as plain weave, twill weave, satin weave, tatami weave, twine weave, and cord weave can be appropriately adopted as the weaving method for the woven fabric. Among these weaving methods, it is preferable to adopt a weaving method in which a fluid passing between communication holes, that is, between one (grain) space formed by intersecting the vertical line and the horizontal line has a passage resistance (for example, the ventilation resistance to be described later) in a predetermined range. From these viewpoints, it is preferable to adopt a weaving method such as plain weave, twill weave, satin weave, twine weave, or tatami weave.

When the inorganic fiber according to the present embodiment is a knitted fabric, as a knitting method for the knitted fabric, there are warp knitting in which knitting is performed in a longitudinal direction such as lace knitting, raschel knitting, tricot knitting, and vandyke knitting, and weft knitting in which knitting is performed in a lateral direction such as flat knitting, plain knitting, rib knitting, tubular knitting, jersey knitting, knot knitting, fraise knitting, and jacquard knitting, and a known knitting method can be appropriately adopted. Among these knitting methods, it is preferable to adopt a knitting method in which a fluid passing between communication holes has a passage resistance (for example, the ventilation resistance to be described later) in a predetermined range. In addition, as a knitting machine, various machines such as a vertical knitting machine, a horizontal knitting machine, a circular knitting machine, and a raschel knitting machine may be used.

When the inorganic fiber according to the present embodiment is a woven and knitted fabric, a woven and knitted yarn to be used is not particularly limited, and the fineness thereof is preferably 50 dtex or more and 8,000 dtex or less, and more preferably 100 dtex or more and 3,000 dtex or less. In addition, the method of twisting the woven and knitted yarn is also not limited, and the twisting method may be any of dry twisting, wet twisting performed by immersion in water, and a combination thereof. Further, the twisting direction is not particularly limited, and may be right twist, left twist, or a combination thereof. In addition, the woven and knitted yarn to be used in the present embodiment may be a false twisted yarn, a filament yarn, or a yarn processed by a POY-DTY method or a PTY (producers textured yarn) method.

Note that, the conditions for the woven and knitted yarn to be used can be appropriately selected depending on the purpose of use or the kind of the aqueous solvent. In addition, as the material for the woven and knitted yarn, the material constituting the inorganic fiber described above or the inorganic material contained in the inorganic fiber is used.

The BET specific surface area of the inorganic fiber may be 0.3 $m^2$/g to 5,000 $m^2$/g, 10 $m^2$/g to 2,000 $m^2$/g, or 30 $m^2$/g to 1,600 $m^2$/g.

The BET specific surface area of the inorganic fiber is measured using a specific surface area meter (BELSORP-mini manufactured by MicrotracBEL Corp.), and the surface area per 1 g of a sample measured based on the amount of nitrogen gas adsorbed by the BET method is calculated as the specific surface area ($m^2$/g).

When the inorganic fiber according to the present embodiment is composed of a nonwoven fabric, the average fiber diameter of all fibers (raw material fibers made of an inorganic material) constituting the nonwoven fabric is preferably 1 $\mu$m to 100 $\mu$m, and more preferably 2 $\mu$m to 10 $\mu$m. The average fiber diameter of the fibers constituting the nonwoven fabric is preferably within the above range since a desired porosity is likely to be ensured. The average fiber diameter can be measured by microscopic observation or by using an image analysis result by a fiber length measurement device (for example, KAJAANI Fiber Lab.).

In addition, when the inorganic fiber according to the present embodiment is composed of a nonwoven fabric, the average fiber length of all fibers (raw material fibers) constituting the nonwoven fabric is preferably 3 mm or more and 200 mm or less, more preferably 5 mm or more and 100 mm or less, and still more preferably 10 mm or more and 50 mm or less. It is preferable that the average fiber length of all the fibers constituting the nonwoven fabric is within the above range and the average fiber diameter of the fibers constituting the nonwoven fabric is within the above range since a desired porosity is likely to be ensured. As the average fiber length, the average fiber diameter can be measured by microscopic observation or by using an image analysis result by a fiber length measurement device (for example, KAJAANI Fiber Lab.).

When the inorganic fiber according to the present embodiment is composed of a cotton-like material, the average fiber length of all fibers (raw material fibers) constituting the cotton-like material is preferably 0.5 $\mu$m or more and 50 $\mu$m or less, more preferably 0.8 $\mu$m or more and 32 $\mu$m or less, and still more preferably 1 $\mu$m or more and 25 $\mu$m or less. It is preferable that the average fiber length of all the fibers constituting the cotton-like material is within the above range and the average fiber diameter of the fibers constituting the cotton-like material is within the above range since a desired porosity is likely to be ensured. As the average fiber length, the average fiber diameter can be measured by microscopic observation or by using an image analysis result by a fiber length measurement device (for example, KAJAANI Fiber Lab.).

Note that, in the present description, the cotton-like material is also a kind of nonwoven fabric, but the cotton-like material is a fiber and has a shape other than a cloth shape (or a flat plate shape).

<Preferred Embodiments of Inorganic Fiber>

Preferred embodiments of the inorganic fiber according to the present embodiment are glass cloth, ceramic wool, rock wool, and glass wool.

The content of the inorganic fiber according to the present embodiment is preferably 0 mass% or more and 50 mass% or less, more preferably 1 mass% or more and 30 mass% or less, still more preferably 1 mass% or more and 10 mass% or less, even more preferably 1 mass% or more and 5 mass% or less, and particularly preferably 1 mass% or more and 3 mass% or less with respect to the total amount (100 mass%) of the content in the heat absorber.

The preferred range of the content of the inorganic fiber can be determined by appropriately changing the upper limit and the lower limit in combination.

When the content of the inorganic fiber is within the above range, the heat absorption amount and the pressure resistance are more excellent, and the heat absorption effect can be changed to a heat insulation effect in a high temperature range.

<Antifreezing Agent>

In the present embodiment, an antifreezing agent may be blended to the aqueous solvent or the content as necessary since the effect of suppressing a decrease in temperature below the freezing point can be improved. In particular, by adding the antifreezing agent to the content in the heat absorber, a high cushioning property can be maintained in a wide temperature range.

The antifreezing agent according to the present embodiment may be an inorganic antifreezing agent or an organic antifreezing agent. In addition, the form of the antifreezing agent may be a liquid, a powder, a solid, or the like.

The inorganic antifreezing agent is preferably a chloride such as sodium chloride, calcium chloride, or magnesium chloride (including a hydrate such as magnesium chloride hexahydrate).

On the other hand, the organic antifreezing agent is preferably a salt of an organic acid or a low volatile substance (low volatile solvent or urea), and more preferably a salt of an organic acid or a low volatile solvent.

As the salt (including a hydrate) of the organic acid, a sodium, potassium, magnesium, or ammonium salt of formic acid, propionic acid, succinic acid, or the like is preferably used, and examples thereof include disodium succinate (including a hydrate such as disodium succinate hexahydrate) or sodium propionate.

**EP 4 741 699 A1**

In addition, examples of the low volatile substance include urea or a low volatile solvent (for example, a polyhydric alcohol). Examples of the low volatile solvent include ethylene glycol, diethylene glycol, glycerin, dipropylene glycol, propylene glycol, butyrolactone, N,N-dimethylformamide, glycerol, 1,3-propanediol, glycol ether, glycol ether, glycol monoether, ethylene glycol, diethylene glycol, propylene glycol, isopropanol, propylene glycol monomethyl ether, di- or tripropylene glycol monomethyl ether, cyclohexanol, glucose, mannose, fructose, galactose, sucrose, lactose, maltose, xylose, arabinose, sorbitol, mannitol, trehalose, or raffinose.

As the low volatile solvent in the present embodiment, an organic solvent having a volatility of preferably 0.1 g or less (0.1 $g/cm^2 \cdot hr \cdot 60°C \cdot 1$ atm or less), more preferably 0.05 g or less, and still more preferably 0.01 g or less per 1 $cm^2 \cdot 1$ hour in an open system at 60°C and 1 atm is used. Specifically, since a solvent easily miscible with water is preferred, a polyhydric alcohol such as glycerin (0.001 $g/cm^2 \cdot hr \cdot 60°C \cdot 1$ atm or less), diglycerin (0.001 $g/cm^2 \cdot hr \cdot 60°C \cdot 1$ atm or less), ethylene glycol (0.01 $g/cm^2 \cdot hr \cdot 60°C \cdot 1$ atm or less), propylene glycol (0.001 $g/cm^2 \cdot hr \cdot 60°C \cdot 1$ atm or less), and polyethylene glycol (0.001 $g/cm^2 \cdot hr \cdot 60°C \cdot 1$ atm or less) is preferred, and glycerin and diglycerin are more preferred. These low volatile solvents may be used alone or in combination of two or more kinds thereof.

When the content in the heat absorber according to the present embodiment contains a low volatile solvent, particularly a polyhydric alcohol, the volatilization of the aqueous solvent is suppressed or prevented, or a decrease in cushioning property at low a temperature is suppressed (the antifreezing property effect is improved).

When the low volatile solvent is used as an optional component, the mass ratio (aqueous solvent/low volatile solvent) of the aqueous solvent to the low volatile solvent in the content in the heat absorber according to the present embodiment is preferably 95/5 to 30/70, more preferably 90/10 to 50/50, and still more preferably 85/15 to 65/35.

The content of the antifreezing agent according to the present embodiment can be 0 mass% or more and 70 mass% or less, and among them, is preferably 5 mass% or more and 60 mass% or less, more preferably 10 mass% or more and 50 mass% or less, still more preferably 15 mass% or more and 35 mass% or less, and particularly preferably 20 mass% or more and 30 mass% or less with respect to the total amount (100 mass%) of the content in the heat absorber. The preferred range of the content of the antifreezing agent can be determined by appropriately changing the upper limit and the lower limit in combination. In addition, when the antifreezing agent is contained in the above range, it is difficult to freeze even at -20°C, and thus the battery can be used in a wide temperature range.


(Additive)

The content or dispersion liquid (a) in the heat absorber according to the present embodiment can contain, as necessary, various additives such as an ultraviolet absorber, an antioxidant, an organic solvent, an inorganic filler other than the water-swellable clay mineral, a viscosity modifier such as a thickener, a crosslinking agent, and a flame retardant. The various additives are optional components, but when these are used, the effects of the present disclosure are not impaired, and it is preferable to use the additives at a proportion according to the purpose of each additive. The proportion cannot be unconditionally determined, and the content of various additives is preferably 0 mass% or more and 50 mass% or less, and more preferably 10 mass% or more and 40 mass% or less with respect to the total amount (mass) of the aqueous solvent and various additives used in the present disclosure.

Examples of the ultraviolet absorber include triazine derivatives such as 2-[4-{(2-hydroxy-3-dodecyloxypropyl)oxy}-2-hydroxyphenyl]-4,6-bis(2,4-dimethylphenyl)-1,3,5-triazine, and 2-[4-{(2-hydroxy-3-tridecyloxypropyl)oxy}-2-hydroxyphenyl]-4,6-bis(2,4-dimethylphenyl)-1,3,5-triazine, 2-(2'-xanthenecarboxy-5'-methylphenyl)benzotriazole, 2-(2'-o-nitrobenzyloxy-5'-methylphenyl)benzotriazole, 2-xanthenecarboxy-4-dodecyloxybenzophenone, and 2-o-nitrobenzyloxy-4-dodecyloxybenzophenone. These ultraviolet absorbers may be used alone or in combination of two or more kinds thereof.

Examples of the antioxidant include "SUMILIZER BBM-S" and "SUMILIZER GA-80" manufactured by Sumitomo Chemical Co., Ltd.

Examples of the organic solvent include: aromatic hydrocarbons such as toluene and xylene; glycols such as ethylene glycol and propylene glycol; polyether glycols, which are multimers thereof; cellosolves; carbitols; and aliphatic alcohols such as methanol. The organic solvents may be used alone or in combination of two or more kinds thereof.

Examples of the inorganic filler include fused silica, crystalline silica, alumina, silicon nitride, and aluminum hydroxide.

Examples of the viscosity modifier such as a thickener include various tackifying resins such as rosin-based, polymerized rosin-based, polymerized rosin ester-based, rosin phenol-based, stabilized rosin ester-based, disproportionated rosin ester-based, terpene-based, terpene phenol-based, and petroleum resin-based tackifying resins.

Examples of the crosslinking agent include known crosslinking agents such as isocyanate-based, epoxy-based, aziridine-based, polyvalent metal salt-based, metal chelate-based, keto-hydrazide-based, oxazoline-based, carbodiimide-based, silane-based, and glycidyl (alkoxy) epoxysilane-based crosslinking agents.

Examples of the flame retardant include: inorganic phosphorus compounds such as red phosphorus, phosphoric acid amides, and ammonium phosphates such as monoammonium phosphate, diammonium phosphate, triammonium phosphate, and ammonium polyphosphate; organic phosphorus compounds such as cyclic organic phosphorus compounds such as a phosphate ester compound, a phosphonic acid compound, a phosphinic acid compound, a phosphine oxide compound, a phosphorane compound, an organic nitrogen-containing phosphorus compound, 9,10-dihydro-9-oxa-10-phosphaphenanthrene-10-oxide, 10-(2,5-dihydroxyphenyl)-10H-9-oxa-10-phosphaphenanthrene-10-oxide, 10-(2,7-dihydroxynaphthyl)-10H-9-oxa-10-phosphaphenanthrene-10-oxide, and derivatives thereof reacted with compounds such as an epoxy resin and a phenol resin; nitrogen-based flame retardants such as a triazine compound, a cyanuric acid compound, an isocyanuric acid compound, and a phenothiazine; silicone-based flame retardants such as a silicone oil, a silicone rubber, and a silicone resin; and inorganic flame retardants such as a metal hydroxide, a metal oxide, a metal carbonate compound, a metal powder, a boron compound, and a low melting point glass. These flame retardants may be used alone or in combination of two or more kinds thereof. In addition, when these flame retardants are used, the content of the flame retardant is preferably in the range of 0.1 mass% to 20 mass% with respect to the entire content or the entire dispersion liquid (a) in the heat absorber.

(Method for Producing Heat Absorber)

An example of a method for producing the heat absorber according to the present embodiment preferably includes a step of filling the bag with the aqueous solvent, the water-soluble inorganic powder, and one or two or more selected from the group consisting of the inorganic fiber and the additive, which are blended as necessary, through the opening, and a step of sealing the opening of the bag to seal the bag.

The aqueous solvent, the water-soluble inorganic powder, and one or two or more selected from the group consisting of the inorganic fiber and the additive, which are blended as necessary, may separately fill the bag through the opening, or a mixed solution (1) in which the water-soluble inorganic powder, and the inorganic fiber and the additive, which are blended as necessary, are impregnated or dispersed in the aqueous solvent may be prepared in advance, and then the mixed solution may fill the bag through the opening.

The mixed solution (1) preferably contains the aqueous solvent and the water-soluble inorganic powder, and among them, preferably contains the aqueous solvent, the water-soluble inorganic powder, and one or two or more selected from the group consisting of the inorganic fiber and the additive, which are blended as necessary.

The mixed solution (1) preferably contains 0 mass% to 50 mass% of the inorganic fiber, 10 mass% to 95 mass% of the aqueous solvent, 0 mass% to 50 mass% of the antifreezing agent, 5% to 90 mass% of the water-soluble inorganic powder (including water in the case of a hydrate), and 0 mass% to 10 mass% of the additive, preferably contains 0% to 30 mass% of the inorganic fiber, 10 mass% to 95 mass% of the aqueous solvent, 0 mass% to 50 mass% of the antifreezing agent, 5% to 70 mass% of the water-soluble inorganic powder (including water in the case of a hydrate), and 0 mass% to 10 mass% of the additive, and more preferably contains 1 mass% to 12 mass% of the inorganic fiber, 20 mass% to 94 mass% of the aqueous solvent, 0 mass% to 25 mass% of the antifreezing agent, 5% to 50 mass% of the water-soluble inorganic powder (including water in the case of a hydrate), and 0 mass% to 50 mass% of the additive, with respect to the total amount (100 mass%) of the mixed solution (1).

The amount of the "water-soluble inorganic powder (including water in the case of a hydrate)" with respect to the total amount (100 mass%) of the mixed solution (1) means the blending amount. Therefore, when the water-soluble inorganic powder is a hydrate, the amount of the water-soluble inorganic powder (including water in the case of a hydrate) includes the amount of water contained in the water-soluble inorganic powder which is a hydrate.

A suitable heat absorber according to the present embodiment can be a heat absorber including a bag, and as the content in the bag, the inorganic fiber (for example, 4 mass% to 9 mass% of rock wool with respect to the total amount of the content), the aqueous solvent (for example, 20 mass% to 60 mass% of water with respect to the total amount of the content), and the water-soluble inorganic powder (for example, 10 mass% to 50 mass% of magnesium sulfate with respect to the total amount of the content). Accordingly, it is possible to provide a heat absorber in which the heat absorption amount and the pressure resistance are more excellent and the heat absorption effect can be changed to the heat insulation effect in a high temperature range.

In the present embodiment, the total content of the aqueous solvent and the water-soluble inorganic powder contained as the content in the bag can be preferably 79 mass% to 100 mass%, more preferably 91 mass% to 99.5 mass%, still more preferably 94 mass% to 99 mass%, and still more preferably 96 mass% to 99.4 mass% with respect to the total amount (100 mass%) of the content in the bag.

In the present embodiment, the total content of the aqueous solvent, the inorganic fiber, and the water-soluble inorganic powder contained as the content in the bag can be preferably 80 mass% to 100 mass%, more preferably 92 mass% to 99.5 mass%, still more preferably 93 mass% to 99.4 mass%, and still more preferably 96 mass% to 99.1 mass% with respect to the total amount (100 mass%) of the content in the bag.

In the present embodiment, the total content of the aqueous solvent, the inorganic fiber, the water-soluble inorganic powder, the antifreezing agent, and the additive contained as the content in the bag can be preferably 83 mass% to 100 mass%, more preferably 94 mass% to 99.8 mass%, still more preferably more than 95 mass% and 99.6 mass% or less, and still more preferably more than 96 mass% and 99.5 mass% or less with respect to the total amount (100 mass%) of the content in the bag.

The upper limit value and the lower limit value of the total content can be appropriately changed in combination.

(Preferred Embodiments of Heat Absorber)

The heat absorber according to the present embodiment preferably exhibits a high cushioning property and/or has an excellent pressure resistance during heating. Hereinafter, each preferred embodiment will be described in detail.

<Highly Cushioning Heat Absorber>

A preferred heat absorber according to the present embodiment includes a bag and a content that fills the bag, and the content contains an aqueous solvent (preferably water) and a water-soluble inorganic powder (preferably magnesium sulfate), and exhibits a high cushioning property. More preferably, the heat absorber is a heat absorber exhibiting a high cushioning property including a bag, and an aqueous solvent (preferably water), a water-soluble inorganic powder (preferably magnesium sulfate), and an inorganic fiber (preferably ceramic wool) as a content that fills bag.

In the present description, the heat absorber exhibiting a high cushioning property is also referred to as a highly cushioning heat absorber.

The expression "exhibiting a high cushioning property" means that the cushioning property is excellent, and when an inorganic fiber is contained as the content in the bag, the bag tends to exhibit a high cushioning property.

In addition, the expression "exhibiting a high cushioning property" specifically means that the cushioning property (%) represented by the following equation (I) is preferably 90% or more, and more preferably 93% or more. By exhibiting the cushioning property of 90% or more, it is likely to follow deformation in a relatively short time such as expansion and contraction due to the charging and discharging of the battery cell. Note that, the upper limit value of the high cushioning property can be 100%.

[Math. 2]

$$\text{"Cushioning property } (\%) = h_a/h_b \times 100 \qquad \text{Equation (I)}$$

(In the above equation (I), $h_a$ represents the height (mm) of a pressed portion after the surface of the highly cushioning heat absorber is pressed at 1 MPa for 60 seconds and then the pressing is released for 5 minutes, and $h_b$ represents the height (mm) before the surface of the highly cushioning heat absorber is pressed at 1 MPa for 60 seconds.)"

In the heat absorber according to the present embodiment, when the cushioning property is emphasized, it is preferable that not only the cushioning property (%) represented by the equation (I) is 90% or more, but also the content of the antifreezing agent is controlled to a predetermined value or less. That is, when the cushioning property is emphasized, the content of the antifreezing agent can be preferably 40 mass% or less, more preferably 30 mass% or less, still more preferably 20 mass% or less, even more preferably 12 mass% or less, even still more preferably 9 mass% or less, yet still more preferably 6 mass% or less, and particularly preferably substantially no content (0.5 mass% or less) with respect to the total amount of the content.

In addition, in the heat absorber according to the present embodiment, when the cushioning property is emphasized, the lower limit of the total amount of the aqueous solvent, the inorganic fiber, the water-soluble inorganic powder, and the antifreezing agent contained in the content can be preferably more than 30 mass%, more preferably 50 mass% or more, still more preferably 70 mass% or more, even more preferably 80 mass% or more, even still more preferably 90 mass% or more, yet still more preferably 95 mass% or more, and particularly preferably 100 mass% with respect to the total amount (100 mass%) of the content in the heat absorber.

On the other hand, the upper limit of the total amount of the aqueous solvent, the inorganic fiber, the water-soluble inorganic powder, and the antifreezing agent contained in the content can be preferably 100 mass% or less, and more preferably 50 mass% or less with respect to the total amount (100 mass%) of the content in the heat absorber.

It is considered that when the total amount of the inorganic fiber, the aqueous solvent, and the water-soluble inorganic powder increases with respect to the total amount of the content, the inorganic fiber and the water-soluble inorganic powder reinforce the elasticity of the content, thereby exhibiting a high cushioning property.

<Highly Pressure Resistant Heat Absorber>

A preferred heat absorber according to the present embodiment is a heat absorber exhibiting an excellent pressure resistance during heating, including a bag and a content that fills the bag, in which the content contains an aqueous solvent (preferably water) and a water-soluble inorganic powder (preferably magnesium sulfate). More preferably, the heat absorber is a heat absorber having an excellent pressure resistance during heating, including a bag and a content that fills the bag, in which an aqueous solvent (preferably water), a water-soluble inorganic powder, and an inorganic fiber as the content.

In the present description, the heat absorber having an excellent pressure resistance during heating is also referred to as a highly pressure resistant heat absorber. The highly pressure resistant heat absorber tends to exhibit an excellent pressure resistance when heated at a high temperature (for example, 800°C or higher) due to thermal runaway of the battery.

The expression "exhibiting a pressure resistance during heating" means that the heat absorber exhibits a high pressure resistance during heating.

Therefore, a preferred embodiment of the highly pressure resistant heat absorber according to the present embodiment can be a highly pressure resistant heat absorber including a bag fillable with a content, an aqueous solvent, a water-soluble inorganic powder, and an inorganic fiber, in which a composite containing the inorganic fiber and the water-soluble inorganic powder fills the bag as the content. At this time, since the water-soluble inorganic powder exhibits an excellent solubility in water, the water-soluble inorganic powder can be uniformly dispersed or dissolved as the content.

It is considered that when the inorganic fiber and the water-soluble inorganic powder coexist, a foam film is temporarily formed during the thermal runaway, and thus the foam film acts on dispersion for reinforcement. In addition, it is considered that when the inorganic fiber and the water-soluble inorganic powder coexist, the inorganic fiber supports the water-soluble inorganic powder and the inorganic fiber promotes the dispersibility of the water-soluble inorganic powder, and thus a synergistic effect with a high pressure resistance is exhibited.

Specifically, in the highly pressure resistant heat absorber according to the present embodiment, the aqueous solvent (water component) in the heat absorber exhibits the heat absorption effect by heating, and evaporates while a foam film is formed. At this time, since the amount of the aqueous solvent is reduced, void portions are generated between the inorganic fibers, and the heat insulation performance is improved. In addition, in the process of evaporation of the aqueous solvent, the water-soluble inorganic powder is precipitated and supported on the inorganic fiber. When the water-soluble inorganic powder is a hydrate, as the heating proceeds, the water component held as a hydrate also evaporates while exhibiting the heat absorption effect. At this time, since the water-soluble inorganic powder can be uniformly dispersed or dissolved in the aqueous solvent, it is possible to suppress the water-soluble inorganic powder from being unevenly distributed and supported on the inorganic fiber.

When the heating proceeds, the water-soluble inorganic powder supported on the inorganic fiber is sintered to firmly reinforce the network structure of the inorganic fiber. In addition, since the inorganic powder forms a porous body in the inorganic fiber, the heat insulation property is further improved. As described above, when the water-soluble inorganic powder is present in a dispersed manner, it is possible to reinforce the network structure and form a porous body in the entire inorganic fiber. Accordingly, the highly pressure resistant heat absorber according to the present embodiment can exhibit a synergistic effect of the heat insulation property and the high pressure resistance. Note that, in the uniform dispersion, for example, when the composite as the content is taken out, a difference in concentration (mass%) of the water-soluble inorganic powder at both ends present in a portion of about 3 mm from an end of the composite can be within ±15%.

In addition, "exhibiting a high pressure resistance during heating" means that, specifically, after the heat absorber is heated until the surface opposite to the heated surface of the heat absorber reaches a predetermined temperature, a rate of change in thickness (%) represented by the following equation (II) is preferably 70% or more, more preferably 75% or more, still more preferably 85% or more, and particularly preferably 90% or more. By exhibiting the rate of change in thickness of 70% or more, the pressure resistance is excellent, so that the chain explosion between the cells can be effectively suppressed or prevented. Note that, the upper limit value of the rate of change in thickness can be 100%.

[Math. 3] "Rate of change in thickness (%) = (thickness of highly pressure resistant heat absorber after pressing, at 0.5 MPa for 60 seconds, surface of heat absorber heated under following heating conditions)/ (thickness of highly pressure resistant heat absorber before pressing, at 0.5 MPa for 60 seconds, surface of heat absorber heated under following heating conditions) × 100"    Equation (II):

In the above equation (II), the "thickness of highly pressure resistant heat absorber after pressing, at 0.5 MPa for 60 seconds, surface of heat absorber heated" is an average thickness (arithmetic mean of thicknesses at any five positions) of the highly pressure resistant heat absorber after pressing, at 0.5 MPa for 60 seconds (within about 20 minutes immediately after pressing), one surface of the highly pressure resistant heat absorber after being heated to a predetermined temperature or higher, preferably one surface of the highly pressure resistant heat absorber after being heated under the following heating conditions.

Similarly, in the above equation (II), the "thickness of highly pressure resistant heat absorber before pressing, at 0.5 MPa for 60 seconds, surface of heat absorber heated" is an average thickness (arithmetic mean of thicknesses at any five positions) of the highly pressure resistant heat absorber before pressing, at 0.5 MPa for 60 seconds, one surface of the highly pressure resistant heat absorber, and after heating one surface of the highly pressure resistant heat absorber to a predetermined temperature or higher, preferably after heating under the following heating conditions.

Heating conditions:
"the heat absorber is heated with a heat amount of $50\,kW/m^2$ by radiant heat until the temperature of the surface opposite to the heated surface (back surface) reaches a predetermined temperature, then the heat absorber is allowed to dissipate heat at room temperature (22°C to 28°C), and is naturally cooled until the temperature of the surface of the heat absorber reaches room temperature (22°C to 28°C), and the rate of change in thickness (%) before and after heating is calculated.

Note that, the heated surface of the heat absorber is pressed at 0.5 MPa for 60 seconds."

In the above heating conditions, the "predetermined temperature" is a temperature at which the heat absorber can change into a porous body, and can be set according to the use environment of the heat absorber, the required explosion proof property, and the assumed thermal runaway starting temperature. The "predetermined temperature" can be, for example, 240°C (240°C or higher), preferably 200°C (200°C or higher), more preferably 180°C (180°C or higher), still more preferably 160°C (160°C or higher), even still more preferably 150°C or higher, and particularly preferably 120°C (120°C or higher). For example, when the rate of change in thickness (%) after heating of the heat absorber heated until the temperature of the surface opposite to the heated surface (back surface) (surface to which the radiant heat is directly applied) of the heat absorber reaches 150°C is a predetermined value or more, the rate of change in thickness of the heat absorber can be a predetermined value or more even in a temperature range of 150°C or higher.

When a high pressure resistance is emphasized, the content in the heat absorber according to the present embodiment preferably contains an inorganic fiber, an aqueous solvent, and a water-soluble inorganic powder.

[Secondary Battery Module]

The kind of a secondary battery on which the heat absorber according to the present embodiment can be mounted is not particularly limited, and examples thereof include a lithium ion battery, a lithium ion polymer battery, a lead storage battery, a nickel-hydrogen storage battery, a nickel-cadmium storage battery, a nickel-iron storage battery, a nickel-zinc storage battery, a silver oxide-zinc storage battery, a metal-air battery, a polyvalent cation battery, a condenser, and a capacitor. Among them, a lithium ion battery is a preferred application target.

A secondary battery module on which the heat absorber according to the present embodiment can be mounted is a secondary battery to be mounted on, for example, a moving body such as a vehicle or a flying body (particularly, a drone), and includes a plurality of battery cells and a case that houses the plurality of battery cells.

The battery cell constituting the secondary battery module (or also referred to as a battery cell) can be, for example, a battery cell in which a battery element including at least a positive electrode material layer, a negative electrode material layer, a separator, a positive electrode current collector, a negative electrode current collector, and the like is sealed in a battery exterior film as an exterior material.

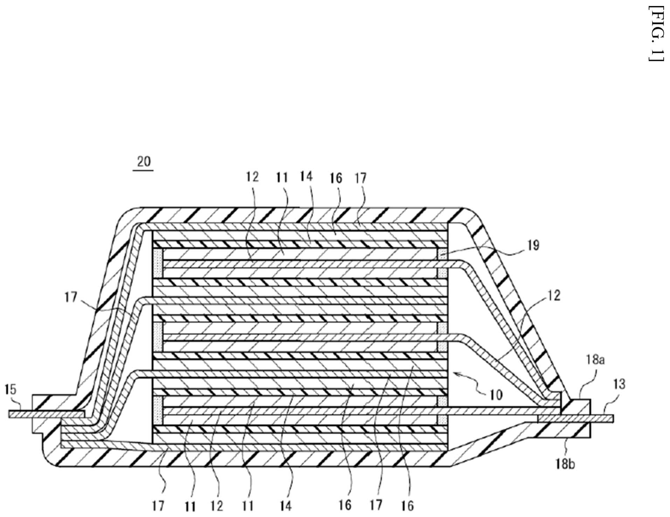

Hereinafter, a secondary battery module on which the heat absorber according to the present embodiment can be mounted will be described with reference to FIG. 1. FIG. 1 shows a cross-sectional view of a laminated battery 20 as an example of a secondary battery. Note that, the secondary battery on which the heat absorber according to the present embodiment can be mounted is not limited to the laminated battery 20 having a flat shape as shown in FIG. 1. The secondary battery on which the heat absorber according to the present embodiment can be mounted may have, for example, a cylindrical shape such as a wound-type secondary battery, or may have a rectangular flat shape by deforming a cylindrical secondary battery.

In the present embodiment, the laminated battery 20 has a structure in which a battery element 10 having a substantially flat rectangular shape in which a charging and discharging reaction substantially proceeds is sealed inside battery exterior materials 18a and 18b. The battery element 10 has a configuration in which a positive electrode, an electrolyte layer (or separator) 14, and a negative electrode are laminated. The positive electrode has a structure in which a positive electrode material layer 11 containing a positive electrode active material is disposed on both surfaces of a positive electrode current collector 12. The negative electrode has a structure in which a negative electrode material layer 16 containing a negative electrode active material is disposed on both surfaces of a negative electrode current collector 17. One positive electrode material layer 11 and the negative electrode material layer 16 adjacent to the positive electrode material layer 11 are disposed to face each other with the electrolyte layer 14 interposed therebetween, and the positive electrode, the electrolyte layer 14, and the negative electrode are sequentially laminated. Accordingly, the adjacent positive electrode, electrolyte layer 14, and negative electrode form one unit cell body. The laminated battery 20 shown in FIG. 1 has a configuration in which a plurality of such unit cell bodies are laminated and electrically connected in parallel. In addition, an activated carbon layer 19 that adsorbs a component derived from the positive electrode active material by melting or sublimation of the positive electrode active material when the battery is exposed to a high temperature is provided.

In addition, as shown in FIG. 1, the positive electrode current collector 12 and the negative electrode current collector 17 are respectively attached to a positive electrode terminal 13 and a negative electrode terminal 15 that connect the positive electrode and the negative electrode, and are structured to be led out of the battery exterior materials 18a and 18b so as to be sandwiched between end portions of the battery exterior materials 18a and 18b. The positive electrode terminal 13 and the negative electrode terminal 15 can be attached to the positive electrode current collector 12 and the negative electrode current collector 17 of each electrode by welding or the like via a positive electrode lead and a negative electrode lead (not shown), respectively, as necessary.

A laminate film is used for the battery exterior materials 18a and 18b, and sealant layers formed on the surfaces of the battery exterior films 18a and 18b are usually heat-sealed. In addition, there is a region where the sealant layers adhere to each other by heat sealing on peripheral edges of the battery exterior materials 18a and 18b.

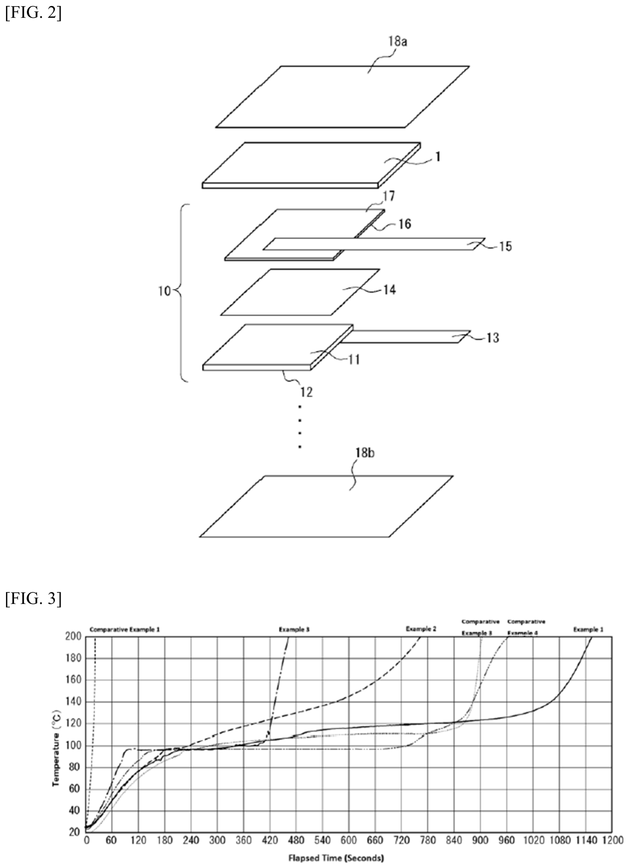

Next, a secondary battery module including the heat absorber according to the present embodiment will be described with reference to FIG. 2. FIG. 2 is a perspective view schematically showing an exploded state of the secondary battery module in FIG. 1. The battery element 10 shown in FIG. 2 has a configuration in which the positive electrode formed on the positive electrode current collector 12 (an aluminum foil or the like) having the positive electrode terminal 13 and the negative electrode disposed on the negative electrode current collector 17 (a metal foil or the like) having the negative electrode terminal 15 are laminated to face each other via the separator 14 containing an electrolyte. Then, a plurality of the battery elements 10 are laminated and sealed with the battery exterior materials 18a and 18b (for example, an aluminum laminate exterior body). A heat absorber 1 according to the present embodiment is disposed in contact with the negative electrode current collector 17. The heat absorber 1 may be disposed in contact with not only the negative electrode current collector 17 but also the positive electrode current collector 12. Therefore, the secondary battery module in which the heat absorber 1 is mounted on the battery element 10 has one or two or more laminates in each of which the positive electrode formed on the positive electrode current collector 12 (an aluminum foil or the like) having the positive electrode terminal 13, the separator 14 containing an electrolyte, and the negative electrode disposed on the negative electrode current collector 17 (a metal foil or the like) having the negative electrode terminal 15 are sequentially laminated, and one or two or more heat absorbers 1 can be disposed in contact with the positive electrode current collector 12 and/or the negative electrode current collector 17 but not in contact with the separator 14.

Note that, when a solid electrolyte or a gel electrolyte is used as the electrolyte, the electrolyte may be interposed between the electrodes instead of the separator 14.

On the other hand, the aqueous solvent, which is the content in the heat absorber according to the present embodiment, and the battery element 10 do not come into direct contact with each other. Therefore, a suitable heat absorber for a secondary battery according to the present embodiment is an embodiment in which the bag is filled with the aqueous solvent, the water-soluble inorganic powder, and the inorganic fiber, but the aqueous solvent and the battery element 10 are not contained as the content in the bag so as to be in direct contact with each other, and more preferably, the battery element 10 is not contained as the content in the bag of the heat absorber for a secondary battery.

In the secondary battery module according to the present disclosure, the heat absorber 1 according to the present embodiment may be sandwiched between adjacent battery elements 10 (or also referred to as battery cells) accommodated in a plurality of cases (not shown) or a plurality of battery exterior films 18a and 18b. Note that, the case can be formed of, for example, aluminum, iron, a metal material containing these, or a resin material such as polyphenylene sulfide, and when the case is formed of a resin material, it can contribute to weight reduction of the secondary battery module.

The heat absorber 1 can be sandwiched between the plurality of battery elements 10 by, for example, an adhesive, fusion (ultrasonic fusion, high-frequency fusion, or thermal fusion), a pressure sensitive adhesive, or the like.

With such a configuration, since the heat absorber 1 sandwiched between the battery elements 10 absorbs heat generated during charging of the secondary battery or the like, a rapid temperature rise or the like of the battery element 10 can be suppressed, and deterioration, ignition, or the like of the battery element 10 can be prevented in advance. It is considered that when the heat absorber 1 is sandwiched between the battery elements 10, the temperature influence between the battery elements 10 can be suppressed by the heat insulation property, and further, the heat absorber 1 acts as a buffer material for the volume change due to the expansion of the battery element 10, and an increase in internal pressure of the secondary battery module is easily alleviated. On the other hand, when thermal runaway occurs in the battery element 10 due to excessive heat generation, the water-soluble inorganic powder in the heat absorber 1 is sintered and changes into a hard plate-shaped porous body, so that the pressure resistance strength can be increased and the thermal conductivity decreases. Accordingly, the heat absorber 1 can keep a constant distance between the cells, maintain an effective heat insulation property, control the thermal conductivity, and effectively suppress the chain explosion or the like of the battery element 10.

In addition, in the secondary battery module, the heat absorber according to the present embodiment may be disposed in a case or a battery exterior film that accommodates a plurality of battery elements (battery cells).

Examples

Hereinafter, the present invention will be specifically described with reference to Examples and Comparative Examples. Note that, the present invention is not limited to the following examples.

(1) Measurement of Heat Absorption Starting Temperature, Heat Absorption Peak Temperature, and Heat Absorption Amount

The heat absorption starting temperature and the heat absorption peak temperature of each of heat absorbers prepared in Examples and Comparative Examples were measured as follows.

Using a differential scanning calorimeter (DSC; DSC-7020 manufactured by Hitachi High-Tech Corporation), the temperature was raised from 20°C to 350°C at a rate of 1°C/min in a nitrogen atmosphere, and the temperature at an intersection between a straight line obtained by extending the base line on the low temperature side to the high temperature side of the DSC measurement curve and a tangent drawn at a point where the gradient was the maximum on the low temperature side of the curve of the heat absorption peak due to evaporation was defined as the heat absorption starting temperature (°C), and the point where the difference from the base line of the DSC measurement curve was the maximum was defined as the heat absorption peak temperature (°C). In addition, the value obtained by dividing the integrated value of the heat absorption peak based on the base line of the DSC measurement curve by the mass of the water-soluble inorganic powder used in the measurement was defined as the heat absorption amount (J/g or mJ/mg).

(2) Evaluation of Cushioning Property

The cushioning property of each of the heat absorbers prepared in Examples and Comparative Examples was evaluated by using the following method. Specifically, at room temperature (23°C), the heat absorber having a size of 100 mm in length, 100 mm in width, and 4.8 mm in height was allowed to stand in a TENSILON universal tester ("RTE-1210" manufactured by ORIENTEC CO., LTD.) equipped with a pushing jig having a diameter of 7 mm, and an indentation test was performed. In the indentation test, the height (mm) $h_a$ of the pressed portion of the surface after the surface of the heat absorber was pressed at 1 MPa for 60 seconds and then the pressing was released for 5 minutes and the height (mm) $h_b$ before the surface of the heat absorber was pressed at 1 MPa for 60 seconds were measured, and the cushioning property (or also referred to as a degree of return) was observed according to the following equation (I) and evaluated according to the following criteria. Note that, the indentation test is performed at two indentation portions on the surface of the heat absorber, the height (or thickness) is measured at each portion, the cushioning property (%) is calculated according to the following equation (I), and the average value thereof is shown in Table 1.

$$\text{Equation (I): Cushioning property (\%)} = h_a/h_b \times 100$$

(Evaluation Criteria for Cushioning Property)

"Return by 90% or more from the original height" was evaluated as "A".
"Return by 80% or more from original height" was evaluated as "B".
"Return by 70% or more from the original height" was evaluated as "C".
"Return by less than 70% to the original height or not measurable" was evaluated as "D".

(3) Heating Experiment Using Cone Calorimeter

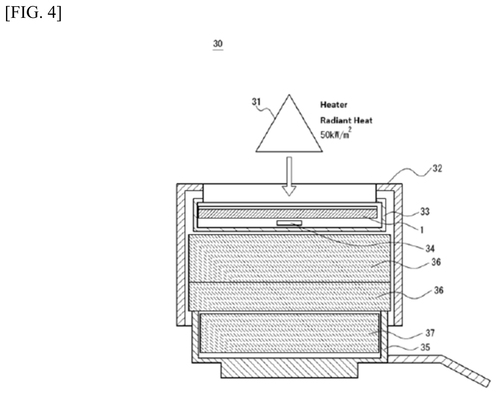

The heat absorbers prepared in Examples and Comparative Examples were directly heated with radiant heat using a cone calorimeter 30 (manufactured by Toyo Seiki Seisakusho, Ltd.) shown in FIG. 4 in accordance with the standard in JIS A 1316. More specifically, the cone calorimeter 30 calculates a heat generation rate, a total heat generation amount, and the like based on the oxygen consumption method by measuring an oxygen concentration in a combustion exhaust gas and an exhaust gas flow rate based on the principle that the relationship between the heat amount generated in combustion and the amount of consumed oxygen is 13.1 MJ per 1 kg of oxygen regardless of the kind of the organic material. The heat absorber 1 is placed as a specimen in an uppermost portion of a holder 32, and heated with a heat amount of 50 kW/m² from a cone 31. Then, the temperature change until the back surface of the heat absorber 1 reached 200°C was measured by a thermocouple 33 on the back surface of the heat absorber 1. In addition, the presence or absence of combustion was also observed together with the temperature change.

(4) Evaluation of Pressure Resistance of Specimen after Heating Experiment

The heat absorbers prepared in Examples and Comparative Examples were subjected to the heating experiment using the cone calorimeter, and then the pressure resistance of each of the heat absorbers was evaluated by the following method. Specifically, at room temperature (23°C), the heat absorber was allowed to stand in a TENSILON universal tester ("RTE-1210" manufactured by ORIENTEC CO., LTD.) equipped with a pushing jig having a diameter of 7 mm, and an indentation test was performed. In the indentation test, the indentation amount during indentation (= during pressing) at 0.5 MPa for 60 seconds was measured. Based on the indentation amount, the rate of change in thickness during pressing was calculated according to the following equation (II), and evaluated according to the following criteria. Note that, the indentation test is performed at two indentation portions on the surface of the heat absorber after the heating experiment using the cone calorimeter is performed, the height (or thickness) is measured at each portion, the rate of change in thickness is calculated according to the following equation (II), and the average value thereof is shown in Table 1.

Rate of change in thickness (%) = (thickness of heat absorber after pressing, at 0.5 MPa for 60 seconds, surface of heat absorber heated under following heating conditions)/(thickness of heat absorber before pressing, at 0.5 MPa for 60 seconds, surface of heat absorber heated under following heating conditions) × 100          Equation (II):

(Evaluation Criteria for Rate of Change in Thickness)

A rate of change in thickness that was in the range of 70% to 100% was evaluated as "A".

A rate of change in thickness that was in the range of 40% to 69% was evaluated as "B".

A rate of change in thickness that was in the range of 0% to 39% or the rate that was unmeasurable was evaluated as "C".

Note that, when the rate of change in thickness is in the range of 70% to 100%, the pressure resistance is most excellent.

The lower the indentation amount (= crushed amount), the more excellent the pressure resistance.

In addition, in Example 1, when the back surface of the heat absorber 1 reached each temperature of 150°C, 160°C, 170°C, 180°C, and 240°C in the heating experiment using the cone calorimeter, natural cooling was performed until the temperature of the surface of the heat absorber reached room temperature, and the rate of change in thickness (%) before and after heating at each temperature was calculated. The results are shown in Table 2 below.

(5) Method for Measuring Average Porosity, True Density, and Bulk Density

The average porosity of the inorganic fiber was calculated using the following equation (1) based on the bulk density $\rho$ f and the true density $\rho$ r measured by the following method.

$$\text{Average porosity } (\%) = ((1/\rho\, f)-(1/\rho\, r))/(1/\rho\, f) \times 100 \qquad \text{Equation (1)}$$

<Measurement of True Density>

The inorganic fiber taken out from the content in the heat absorber or the inorganic fiber before being sealed in the bag was thoroughly washed with distilled water and dried overnight. Then, the dried inorganic fiber was charged into a stoppered test tube, then a mixed solvent obtained by appropriately mixing three kinds of solvents was added to the stoppered test tube, and the stoppered test tube was immersed in a constant temperature bath at 30°C. At this time, when the inorganic fiber floats, low-density n-heptane is added. On the other hand, when the inorganic fiber sinks, high-density ethylene dibromide is added. This operation was repeated such that the inorganic fiber was in a state of floating in the mixed solvent, and the density of the mixed solvent was measured using a Gay-Lussac pycnometer.

<Measurement of Bulk Density>

The inorganic fiber taken out from the content in the heat absorber or the inorganic fiber before being sealed in the bag was thoroughly washed with distilled water and dried overnight, and then the dimensions of the dried inorganic fiber were measured to calculate the bulk volume V of the inorganic fiber. Thereafter, the mass M of the inorganic fiber was measured using a precision balance. Based on the obtained mass M and bulk volume V, the bulk density of the inorganic fiber was calculated using the following equation (2).

$$\text{Bulk density } \rho \, f \, (\text{g/cm}^3) = M/V \qquad \text{Equation (2)}$$

(2) Raw Materials Used

<Water-soluble Inorganic Powder>

The water-soluble inorganic powders used in Examples and Comparative Examples are as follows.

· Magnesium sulfate heptahydrate: (product name "Magnesium Sulfate Heptahydrate Cica Grade 1" manufactured by Kanto Chemical Co., Inc.", solubility (g/100 g) in 100 g of water at 20°C: 71 g)
· Aluminum hydroxide: (product name "Aluminum Hydroxide Cica Grade 1", manufactured by Kanto Chemical Co., Inc., solubility (g/100 g) in 100 g of water at 20°C: less than 0.1 g)
· Sodium acetate: (product name "Sodium Acetate Cica Grade 1", manufactured by Kanto Chemical Co., Inc., solubility (g/100 g) in 100 g of water at 20°C: 46.5 g)
· Calcium sulfate dihydrate: (product name "Calcium Sulfate Dihydrate Cica Grade 1" manufactured by Kanto Chemical Co., Inc., solubility (g/100 g) in 100 g of water at 20°C: 0.2 g)

Note that, the solubility of the hydrate in terms of an anhydride is as follows.

· Solubility (g/100 g) of magnesium sulfate anhydride in 100 g of water at 20°C: 30 g
· Solubility (g/100 g) of calcium sulfate anhydride in 100 g of water at 20°C: 0.2 g

Note that, in the bag of the heat absorber, the magnesium sulfate heptahydrate is present as an anhydride, and the calcium sulfate dihydrate is present as a hydrate.

<Bag>

It is found that the water vapor permeability ($[\text{g/(m}^2 \cdot 24 \text{ h})]$) of an aluminum pouch as a bag-shaped body used in Examples 1 to 4 to be described later is 50 $\text{g/(m}^2 \cdot 24 \text{ h})$ or less.

(3) Examples and Comparative Examples

<Example 1>

Magnesium sulfate heptahydrate (32 parts by mass, the blending amount containing water in the hydrate) and 60 parts by mass of pure water were mixed to prepare a water-soluble inorganic powder-containing aqueous solution (1). Then, 92 parts by mass of the water-soluble inorganic powder-containing aqueous solution (1) and 8 parts by mass of ceramic wool (average porosity: 96.9%, true density: 3, bulk density: 0.093) were inserted into a container in which an aluminum pouch ("Gas Barrier Bag" manufactured by MITSUBISHI GAS CHEMICAL COMPANY, INC., thickness: 0.094 mm, configuration in which PET, aluminum foil, and polyethylene were laminated) was formed into a bag-shaped body having 116 mm in length and 116 mm in width.
Next, the aluminum pouch as the bag-shaped body was filled with the water-soluble inorganic powder-containing aqueous solution (1), an injection port was closed by heat sealing, then the aluminum pouch as the bag-shaped body was placed flat between gap members having a thickness of 4.8 mm, and a flat plate was placed thereon, followed by being allowed to stand at 20°C for 10 minutes, to prepare a sheet-shaped heat absorber (1) having a thickness of 4.8 mm. Then, each evaluation was performed on the obtained heat absorber (1) according to the procedures described in the above section of evaluation. The results are shown in Table 1 and FIG. 3.
In addition, when the heat absorber (1) prepared in Example 1 is heated to 200°C at the back surface temperature of the specimen by a cone calorimeter, it is found that the heat absorber (1) prepared in Example 1 has changed into a porous body at 150°C or higher. (a) in FIG. 5 shows a cross-sectional photograph of the heat absorber (1) that has changed into a porous body.

<Example 2>

Sodium acetate (27 parts by mass) and 64 parts by mass of pure water were mixed to prepare a water-soluble inorganic powder-containing aqueous solution (2). Then, 91 parts by mass of the water-soluble inorganic powder-containing aqueous solution (2) and 9 parts by mass of ceramic wool (average porosity: 96.8%, true density: 3, bulk density: 0.096) were inserted into a container in which an aluminum pouch ("Gas Barrier Bag" manufactured by MITSUBISHI GAS CHEMICAL COMPANY, INC., thickness: 0.094 mm, configuration in which PET, aluminum foil, and polyethylene were laminated) was formed into a bag-shaped body having 116 mm in length and 116 mm in width.

Next, the aluminum pouch as the bag-shaped body was filled with the water-soluble inorganic powder-containing aqueous solution (2), an injection port was closed by heat sealing, then the aluminum pouch as the bag-shaped body was placed flat between gap members having a thickness of 4.8 mm, and a flat plate was placed thereon, followed by being allowed to stand at 20°C for 10 minutes, to prepare a sheet-shaped heat absorber (2) having a thickness of 4.8 mm. Then, each evaluation was performed on the obtained heat absorber (2) according to the procedures described in the above section of evaluation. The results are shown in Table 1 and FIG. 3.

In addition, when the heat absorber (2) prepared in Example 1 is heated to 200°C by a cone calorimeter, it is found that the heat absorber (2) prepared in Example 2 has changed into a porous body at 180°C or higher. (b) in FIG. 5 shows a cross-sectional photograph of the heat absorber (2) that has changed into a porous body.

<Example 3>

Magnesium sulfate heptahydrate (35 parts by mass, the blending amount containing water in the hydrate) and 65 parts by mass of pure water were mixed to prepare a water-soluble inorganic powder-containing aqueous solution (3). Then, 100 parts by mass of the water-soluble inorganic powder-containing aqueous solution (3) was inserted into a container in which an aluminum pouch ("Gas Barrier Bag" manufactured by MITSUBISHI GAS CHEMICAL COMPANY, INC., thickness: 0.094 mm, configuration in which PET, aluminum foil, and polyethylene were laminated) was formed into a bag-shaped body having 116 mm in length and 116 mm in width.

Next, the aluminum pouch as the bag-shaped body was filled with the water-soluble inorganic powder-containing aqueous solution (3), an injection port was closed by heat sealing, then the aluminum pouch as the bag-shaped body was placed flat between gap members having a thickness of 4.8 mm, and a flat plate was placed thereon, followed by being allowed to stand at 20°C for 10 minutes, to prepare a sheet-shaped heat absorber (3) having a thickness of 4.8 mm. Then, each evaluation was performed on the obtained heat absorber (3) according to the procedures described in the above section of evaluation. The results are shown in Table 1 and FIG. 3.

In addition, when the heat absorber (3) prepared in Example 3 is heated to 200°C by a cone calorimeter, it is found that the heat absorber (3) prepared in Example 3 has also changed into a porous body at 180°C or higher, similar to the heat absorbers in Examples 1 and 2.

<Example 4>

Magnesium sulfate anhydride (25 parts by mass, the blending amount containing water in the hydrate) and 75 parts by mass of pure water were mixed to prepare a water-soluble inorganic powder-containing aqueous solution (4). Then, 100 parts by mass of the water-soluble inorganic powder-containing aqueous solution (4) was inserted into a container in which an aluminum pouch ("Gas Barrier Bag" manufactured by MITSUBISHI GAS CHEMICAL COMPANY, INC., thickness: 0.094 mm, configuration in which PET, aluminum foil, and polyethylene were laminated) was formed into a bag-shaped body having 116 mm in length and 116 mm in width.

Next, the aluminum pouch as the bag-shaped body was filled with the water-soluble inorganic powder-containing aqueous solution (4), an injection port was closed by heat sealing, then the aluminum pouch as the bag-shaped body was placed flat between gap members having a thickness of 4.8 mm, and a flat plate was placed thereon, followed by being allowed to stand at 20°C for 10 minutes, to prepare a sheet-shaped heat absorber (4) having a thickness of 4.8 mm. Then, each evaluation was performed on the obtained heat absorber (4) according to the procedures described in the above section of evaluation. As a result, the heat absorption amount, the meltdown temperature, the heat absorption starting temperature, the heat absorption peak temperature, the pressure resistance, and the cushioning property are all evaluated to have the same results as in Example 2.

<Comparative Example 1>

As Comparative Example 1, a commercially available material "silica aerogel mat material manufactured by Xiaomei Corporation, thickness: 4.8 mm (actually measured), thermal conductivity: 0.012 W/m·K to 0.018 W/m·K" was used as a comparative sheet (C1). Note that, the silica aerogel mat material in Comparative Example 1 had a nominal thickness of 3 mm. Then, each evaluation was performed on the obtained comparative sheet (C1) according to the procedures described in the above section of evaluation. The results are shown in Table 1 and FIG. 3.

Note that, since the material "silica aerogel mat material manufactured by Xiaomei Corporation" in Comparative Example 1 has substantially no heat absorption capacity, the items "heat absorption starting temperature (°C), heat absorption peak temperature (°C), and heat absorption amount (J/g or mJ/mg) of heat absorber" in the table are indicated as "substantially no heat absorption capacity". In addition, since the bulk density of the material used in Comparative Example 1 can be actually measured but the true density cannot be measured, the items "true density and average porosity" in the table are indicated as "not measurable".

<Comparative Example 2>

An aluminum pouch ("Gas Barrier Bag" manufactured by MITSUBISHI GAS CHEMICAL COMPANY, INC., thickness: 0.094 mm, configuration in which PET, aluminum foil, and polyethylene were laminated) was prepared as a bag-shaped body having 116 mm in length and 116 mm in width. Next, the aluminum pouch as the bag-shaped body was filled with 33 parts by mass of pure water and 67 parts by mass of calcium sulfate dihydrate (the blending amount containing water in the hydrate) as an inorganic powder, an injection port was closed by heat sealing, then the aluminum pouch as the bag-shaped body was placed flat between gap members having a thickness of 4.8 mm, and a flat plate was placed thereon, followed by being allowed to stand at 20°C for 10 minutes to, prepare a sheet-shaped comparative sheet (C2) having a thickness of 4.8 mm. Then, each evaluation was performed on the obtained comparative sheet (C2) according to the procedures described in the above section of evaluation. The results are shown in Table 1 and FIG. 3.

Note that, in the system of Comparative Example 2, the DSC of the liquid cannot be measured, and thus data on the heat absorption amount (J/g or mJ/mg) has not been obtained. Therefore, a value of 1,170 J/g calculated based on an approximate value of 2,000 J/g (100°C) of the literature value of 2,257 J/g is written in the table.

(Specifically, approximate value of heat absorption amount of water 2,000 J/g × 33% + heat absorption amount of calcium sulfate (measured value) 762 J/g × 67% = 1170 J/g)

< Comparative Example 3>

Pure water (91 parts by mass) and 9 parts by mass of ceramic wool (average porosity: 96.9%, true density: 3, bulk density: 0.092) were inserted into a container in which an aluminum pouch ("Gas Barrier Bag" manufactured by MITSUBISHI GAS CHEMICAL COMPANY, INC., thickness: 0.094 mm, configuration in which PET, aluminum foil, and polyethylene were laminated) was formed into a bag-shaped body having 116 mm in length and 116 mm in width.

Next, the aluminum pouch as the bag-shaped body was filled with the pure water and the ceramic wool, an injection port was closed by heat sealing, then the aluminum pouch as the bag-shaped body was placed flat between gap members having a thickness of 4.8 mm, and a flat plate was placed thereon, followed by being allowed to stand at 20°C for 10 minutes, to prepare a comparative sheet (C3) having a thickness of 4.8 mm. Then, each evaluation was performed on the obtained comparative sheet (C3) according to the procedures described in the above section of evaluation. The results are shown in Table 1 and FIG. 3.

< Comparative Example 4>

Twenty-seven parts by mass of aluminum hydroxide (solubility in 100 g of water at 20°C: 0.0001 g) and 64 parts by mass of pure water were mixed to prepare a dispersion liquid (1). Then, 91 parts by mass of the dispersion liquid (1) and 9 parts by mass of ceramic wool (average porosity: 96.8%, true density: 3, bulk density: 0.096) were inserted into a container in which an aluminum pouch ("Gas Barrier Bag" manufactured by MITSUBISHI GAS CHEMICAL COMPANY, INC., thickness: 0.094 mm, configuration in which PET, aluminum foil, and polyethylene were laminated) was formed into a bag-shaped body having 116 mm in length and 116 mm in width.

Next, the aluminum pouch as the bag-shaped body was filled with the dispersion liquid (1), an injection port was closed by heat sealing, then the aluminum pouch as the bag-shaped body was placed flat between gap members having a thickness of 4.8 mm, and a flat plate was placed thereon, followed by being allowed to stand at 20°C for 10 minutes, to prepare a sheet-shaped comparative sheet (C4) having a thickness of 4.8 mm. Then, each evaluation was performed on the obtained comparative sheet (C4) according to the procedures described in the above section of evaluation. The results are shown in Table 1 and FIG. 3.

Note that, in Examples 1 and 3, the "content (mass%) of water-soluble inorganic powder" in the "content (blending amount during preparation)" in Table 1 indicates the content in a hydrate state, and in the "content (in bag)", the "content (mass%) of water-soluble inorganic powder" indicates the content in a state where water is excluded from the hydrate (anhydride), and the "content (mass%) of aqueous solvent" indicates the content including the amount of water excluded from the hydrate of the water-soluble inorganic powder in the content of the aqueous solvent during preparation.

In addition, in Comparative Examples 2 and 4, the "content (mass%) of water-soluble inorganic powder" in the "content (blending amount during preparation)" and the "content (mass%) of water-soluble inorganic powder" in the "content (in bag)" in Table 1 indicate the content (mass%) of a water-insoluble inorganic powder. In Comparative Example 2, in the content (in bag)", the "content (mass%) of water-soluble inorganic powder" indicates the content including the amount of water in the hydrate, and the "content (mass%) of aqueous solvent" is the same as the content of the aqueous solvent during preparation.

[Table 1]

| Table 1 | | Example 1 | Example 2 | Example 3 | Comparative Example 1 | Comparative Example 2 | Comparative Example 3 | Comparative Example 4 |
|---|---|---|---|---|---|---|---|---|
| Kind of heat absorber | | Heat absorber (1) | Heat absorber (2) | Heat absorber (3) | Heat absorber (C1) | Heat absorber (C2) | Heat absorber (C3) | Heat absorber (C4) |
| Content (blending amount during preparation) | Kind of aqueous solvent | Water | Water | Water | - | Water | Water | Water |
| | Content (mass%) of aqueous solvent | 60 | 64 | 65 | - | 33 | 91 | 64 |
| | Kind of water-soluble inorganic powder | Magnesium sulfate heptahydrate | Sodium acetate | Magnesium sulfate heptahydrate | - | Calcium sulfate dihydrate | - | Aluminum hydroxide |
| | Content (mass%) of water-soluble inorganic powder *Examples 1 and 3: content in hydrate Comparative Examples 2 and 4: content of water-insoluble inorganic powder | 32 | 27 | 35 | - | 67 | - | 27 |
| | Kind of antifreezing agent | - | - | - | - | | - | - |
| | Content (mass%) of antifreezing agent | - | - | - | - | | - | - |
| | Content (mass%) of additive | - | - | - | - | | - | - |
| | Kind of inorganic fiber | Ceramic wool | Ceramic wool | None | None | None | Ceramic wool | Ceramic wool |
| | Content (mass%) of inorganic fiber | 8 | 9 | 0 | 0 | 0 | 9 | 9 |

EP 4 741 699 A1

26

(continued)

| Table 1 | | Example 1 | Example 2 | Example 3 | Comparative Example 1 | Comparative Example 2 | Comparative Example 3 | Comparative Example 4 |
|---|---|---|---|---|---|---|---|---|
| Content (in bag) | Content (mass%) of aqueous solvent *Including water of hydrate of water-soluble inorganic powder | 76 | 64 | 83 | - | 33 | 91 | 64 |
| | Content (mass%) of water-soluble inorganic powder *Examples 1 and 3: content in anhydride *Comparative Examples 2 and 4: content of water-insoluble inorganic powder | 16 | 27 | 17 | - | 67 | - | 27 |
| | Content (mass%) of inorganic fiber | 8 | 0 | 0 | 0 | 0 | 9 | 9 |
| Average porosity (%) of inorganic fiber | | 96.9% | 96.8% | - | Not measurable | - | 96.9% | 96.9% |
| Bulk density $\rho f$ (g/cm³) of inorganic fiber | | 0.093 | 0.096 | - | 0.126 | - | 0.092 | 0.094 |
| True density $\rho r$ (g/cm³) of inorganic fiber | | 3 | 3 | - | Not measurable | - | 3 | 3 |
| Heat absorption starting temperature (°C) of heat absorber | | 95 | 95 | 95 | Substantially no heat absorption capacity | 95 | 95 | 95 |
| Heat absorption peak temperature (°C) | | 100 | 100 | 100 | | 100 | 100 | 100 |
| Heat absorption amount (J/g or mJ/mg) | | 1300 | 1460 | 1300 | | 1170 | 2000 | 1650 |
| Time (seconds) required to reach meltdown temperature (160°C) | | 1104 | 667 | 433 | 25 | 456 | 892 | 906 |
| Presence or absence of combustion | | Absence | Absence | Absence | Absence | Absence | Absence | Absence |
| Cushioning property (degree of return before and after load of 1 Mpa (= rate of change in | Result of evaluation of degree of | 81% B | 76% C | 82% B | 73% C | Not measurable D | 78% C | 86% B |
| Pressure resistance height)) after heating test, rate of change in thickness at 0.5 MPa | Result of evaluation of rate of change in thickness | 94% | 81% | 76% | 38% | Not measurable | 17% | 27% |
| | | 0.7 | 2.4 | 0.9 | 3.0 | - | 7.4 | 4.9 |

| Table 1 | | Example 1 | Example 2 | Example 3 | Comparative Example 1 | Comparative Example 2 | Comparative Example 3 | Comparative Example 4 |
|---|---|---|---|---|---|---|---|---|
| | and indentation amount | A | A | A | C | C | C | C |

[Table 2]

| Back surface reaching temperature | 150° C | 160° C | 170° C | 180° C | 200° C | 240° C |
|---|---|---|---|---|---|---|
| Rate of change in thickness | 75% | 73% | 80% | 96% | 94% | 96% |

As seen from the above experiment results, in the heat absorber according to the present embodiment, since the content for filling and the bag act as a porous body as a whole, a sufficient heat absorption effect and pressure resistance, and a change from the heat absorber to the heat insulator are found even when the temperature of the battery rises or the time elapses. The heat absorber using the water-insoluble inorganic powder (Comparative Examples 2 and 4) has a result of being inferior particularly in pressure resistance to the heat absorber containing the water-soluble inorganic powder. Note that, the values of the contents in the content composition in Table 1 are rounded off to the nearest whole number.

In addition, FIG. 3 is a graph showing the results of the cone calorimeter test on the heat absorbers (1) to (3) prepared in Examples 1 to 4 and the comparative sheets (C1), (C3), and (C4) prepared in Comparative Examples 1, 3, and 4. In FIG. 3, the vertical axis represents the temperature (°C) and the horizontal axis represents the elapsed time (seconds). Therefore, (1) to (3) and (C1), (C3), and (C4) in FIG. 3 correspond to the heat absorbers (1) to (3) and the comparative sheets (C1) (C3) and (C4) in Examples and Comparative Examples.

As seen from the experiment results in FIG. 3, the heat absorbers (1) to (3) prepared in Examples 1 to 3 have a heat absorption capacity higher than that of the heat absorbers in Comparative Examples, and thus the time until the temperature of the heat absorber reaches 200°C is delayed.

REFERENCE SIGNS LIST

1: heat absorber
10: battery element
11: positive electrode material layer
12: positive electrode current collector
13: positive electrode terminal
14: electrolyte layer or separator
15: negative electrode terminal
16: negative electrode material layer
17: negative electrode current collector
18a, 18b: battery exterior material
19: activated carbon layer
20: laminated battery
30: cone calorimeter
31: cone (heater)
32: stainless steel holder
33: aluminum foil cover
34: thermocouple
35: stainless steel holder
36: ceramic wool (large)
37: ceramic wool (small)

The present application claims the profits of priority for the three applications of Japanese Patent Application (No. 2023-109644) filed on July 3, 2023, Japanese Patent Application (No. 2023-218613) filed on December 25, 2023, and Japanese Patent Application (No. 2023-218614) filed on December 25, 2023, contents of which are incorporated in the present description as reference.

**Claims**

1. A heat absorber comprising:

a bag fillable with a content; and
an aqueous solvent and a water-soluble inorganic powder that dissolves in an amount of 1 g or more in 100 g of water at 20°C, which are configured to fill the bag as the content.

2. The heat absorber according to claim 1, wherein the water-soluble inorganic powder has a solubility (g) of 5 g/100 g or more in water at 20°C.

3. The heat absorber according to claim 1 or 2, wherein the content further contains one or two or more selected from the group consisting of an antifreezing agent and an inorganic fiber.

4. The heat absorber according to claim 1 or 2, wherein the water-soluble inorganic powder is one or two or more selected from a chloride, a sulfate, a carbonate, a nitrate, a phosphate, an acetate, an alkali metal oxide, and an alkaline earth metal oxide.

5. The heat absorber according to claim 1 or 2, wherein an aqueous solution containing the aqueous solvent and the water-soluble inorganic powder fills the bag as the content, and a content of the water-soluble inorganic powder in the aqueous solution is 5 mass% to 80 mass% with respect to a total amount of the aqueous solution.

6. The heat absorber according to claim 1 or 2, wherein the content changes into a porous body when the content is heated to 120°C or higher.

7. The heat absorber according to claim 1 or 2, wherein a rate of change in thickness is 70% or more, which is represented by the following equation (I):

"Rate of change in thickness (%) = (thickness of heat absorber after pressing, at 0.5 MPa for 60 seconds, surface of heat absorber heated under following heating conditions)/(thickness of heat absorber before pressing, at 0.5 MPa for 60 seconds, surface of heat absorber heated under following heating conditions) × 100"     [Math. 1]

Heating conditions:
"the heat absorber is heated with a heat amount of 50 kW/m$^2$ by radiant heat until a temperature of a surface opposite to the heated surface (back surface) reaches a predetermined temperature, then the heat absorber is allowed to dissipate heat at room temperature, and is naturally cooled until the temperature of the surface of the heat absorber reaches room temperature, and the rate of change in thickness (%) before and after heating is calculated, where the heated surface of the heat absorber is pressed at 0.5 MPa for 60 seconds".

8. A secondary battery module comprising:
the heat absorber according to claim 1 or 2.

9. The secondary battery module according to claim 8, wherein the heat absorber is sandwiched between battery cells.

[FIG. 1]

[FIG. 2]

[FIG. 3]

[FIG. 4]

[FIG. 5]

(a)

(b)

## INTERNATIONAL SEARCH REPORT

| International application No. |
| --- |
| **PCT/JP2024/024117** |

**A. CLASSIFICATION OF SUBJECT MATTER**

*F16L 59/02*(2006.01)i; *H01M 10/651*(2014.01)i; *H01M 10/653*(2014.01)i; *H01M 10/658*(2014.01)i; *H01M 10/6551*(2014.01)i; *H01M 10/6555*(2014.01)i

FI:  F16L59/02; H01M10/658; H01M10/651; H01M10/6555; H01M10/6551; H01M10/653

According to International Patent Classification (IPC) or to both national classification and IPC

**B. FIELDS SEARCHED**

Minimum documentation searched (classification system followed by classification symbols)

F16L59/02; H01M10/651; H01M10/653; H01M10/658; H01M10/6551; H01M10/6555

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | US 2020/0287252 A1 (BEIJING KEY POWER TECHNOLOGIES CO., LTD.) 10 September 2020 (2020-09-10)<br>paragraphs [0041]-[0065], fig. 1-8 | 1-9 |
| Y | JP 2009-22493 A (TAKABISHI KAGAKU KK) 05 February 2009 (2009-02-05)<br>paragraph [0063] | 1-9 |
| Y | WO 2010/098067 A1 (PANASONIC CORPORATION) 02 September 2010 (2010-09-02)<br>paragraph [0022], fig. 2C | 3 |
| Y | WO 2023/120545 A1 (IBIDEN CO., LTD.) 29 June 2023 (2023-06-29)<br>paragraphs [0032]-[0135], fig. 1-3 | 3, 6 |
| Y | WO 2023/120544 A1 (IBIDEN CO., LTD.) 29 June 2023 (2023-06-29)<br>paragraphs [0030]-[0086], fig. 1-2 | 3 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 September 2024** | **24 September 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/024117** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 116365088 A (IBIDEN CO., LTD.) 30 June 2023 (2023-06-30)<br>paragraphs [0075]-[0207], fig. 1-5 | 3 |

Form PCT/ISA/210 (second sheet) (July 2022)

**INTERNATIONAL SEARCH REPORT**
Information on patent family members

International application No.

**PCT/JP2024/024117**

| Patent document cited in search report | | | Publication date (day/month/year) | Patent family member(s) | | | Publication date (day/month/year) |
|---|---|---|---|---|---|---|---|
| US | 2020/0287252 | A1 | 10 September 2020 | WO | 2018/099396 | A1 | |
| | | | | EP | 3550662 | A1 | |
| | | | | CN | 108054460 | A | |
| | | | | CN | 207587926 | U | |
| | | | | KR | 10-2019-0082974 | A | |
| JP | 2009-22493 | A | 05 February 2009 | (Family: none) | | | |
| WO | 2010/098067 | A1 | 02 September 2010 | US | 2011/0274951 | A1 | |
| | | | | paragraph [0051], fig. 2C | | | |
| | | | | CN | 102301503 | A | |
| WO | 2023/120545 | A1 | 29 June 2023 | CN | 219066973 | U | |
| | | | | CN | 116365113 | A | |
| WO | 2023/120544 | A1 | 29 June 2023 | CN | 219066951 | U | |
| | | | | CN | 116344998 | A | |
| CN | 116365088 | A | 30 June 2023 | WO | 2023/127905 | A1 | |
| | | | | CN | 219513215 | U | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022270359 A
- JP 2020161290 A
- JP 2023109644 A
- JP 2023218613 A
- JP 2023218614 A